# EUROPEAN PATENT SPECIFICATION

(11) **EP 3 604 452 B1**
(45) Date of publication and mention of the grant of the patent: **04.05.2022**
(21) Application number: 18777867.5
(22) Date of filing: 29.03.2018
(51) Int. Cl.: C08L 101/00, B01D 53/22, B01D 71/28, B01D 71/40, C08F 291/00, C08J 3/075, C08J 9/36, C08K 3/22, C08K 3/26, B01D 69/14, B01D 67/00, C08J 9/40, C08J 9/42, C08L 33/02, C08L 101/14

(54) **GEL HAVING MUTUALLY INTRUSIVE NETWORK STRUCTURES**
GEL MIT GEGENSEITIG EINDRINGENDEN NETZWERKSTRUKTUREN
GEL AYANT DES STRUCTURES DE RÉSEAUX MUTUELLEMENT INTRUSIVES

(30) Priority: 31.03.2017 JP 2017072272
(43) Date of publication of application: 05.02.2020
(73) Proprietor: Sumitomo Chemical Company, Limited, Tokyo 104-8260 (JP)
(72) Inventor: YAMAMOTO, Atsushi, Osaka-shi Osaka 554-8558 (JP); KAMIKAWA, Takashi, Osaka-shi Osaka 554-8558 (JP)
(74) Representative: Winter, Brandl - Partnerschaft mbB
(86) International application number: PCT/JP2018/013165
(87) International publication number: WO 2018/181682

(56) References cited:
- WO-A1-2017/051734
- WO-A2-02/38257
- JP-A- H 093 034
- JP-A- S 492 845
- JP-A- S6 183 530
- JP-A- S6 379 887
- JP-A- H01 103 615
- JP-A- H01 263 103
- JP-A- S56 101 142
- JP-A- 2002 012 628
- JP-A- 2002 517 529
- JP-A- 2003 183 328
- JP-A- 2006 037 110
- JP-A- 2007 009 211
- JP-A- 2007 314 669
- JP-A- 2013 509 364
- US-A- 4 708 981
- SAIMANI S ET AL: "Separation performance of asymmetric membranes based on PEGDa/PEI semi-interpenetrating polymer network in pure and binary gas mixtures of CO"2, N"2 and CH"4", JOURNAL OF MEMBRANE SCIENCE, ELSEVIER BV, NL, vol. 362, no. 1-2, 15 October 2010 (2010-10-15), pages 353-359, XP027210254, ISSN: 0376-7388 [retrieved on 2010-08-03]

## Description

### [Technical Field]

The present invention relates to a gel useful for gas separation membranes and the like.

### [Background Art]

In separation and recovery of acidic gasses such as carbon dioxide, hydrogen sulfide and the like, a separation method using a gas separation membrane having selective acidic gas permeability (acidic gas selectivity) is expected to realize more energy saving and gas separation compared to the current chemical absorption method using amine absorption liquid. Therefore, a separation method using a gas separation membrane has been actively studied.

For example, JP 2013 111565 A describes a gas separation membrane containing a supporting layer and a separation layer containing a polymer having a network structure in which a first polymer and a second polymer are connected via a covalent bond. JP 2016 077997 A describes a structure containing a first network structure, a second network structure and an amino acid ionic liquid, and having CO₂ selectivity.

WO 2017/051734 Al discloses a hydrogel containing a gel strength improver and a polymer matrix. The polymer matrix comprises copolymer of a monofunctional monomer having one ethylenically unsaturated group and a polyfunctional monomer having from two to six ethylenically unsaturated groups. The gel strength improver can be selected from polyhydric alcohols, polyhydric ion-containing compounds, polyvinyl alcohol-based polymers, and cellulose nanofibers. US 4,708,981 A discloses polymeric membranes, which are useful in gas-separation or gas sensing. The membrane consists of an interpenetrating network membrane, which comprises a host polymer blend and a guest polymer, wherein the host polymer blend is comprised of an acid selected from the group consisting of phosphoric acids and sulfuric acid and a component selected from the group consisting of a polymer selected from the group consisting of poly(vinyl alcohol) poly(ethyleneimine), poly(acrylic acid); and wherein the guest polymer is formed from a monofunctional monomer selected from the group consisting of acrylic acid, methacrylic acid, acrylamide, methacrylamide, 2-acrylamido-2-methylpropanesulfonic acid, N-benzylacrylamide, N-ethylmethacrylamide, N-phenylacrylamide and N-phenylmethacrylamide and a difunctional cross-linking agent selected from the group consisting of methylenebisacrylamide, N,N-diallylacrylamide, m-xylenebisacrylamide and N,N'-trimethylenebisacrylamide. WO 02/38257 A2 discloses a separation device for the separation of water vapour from a gas stream, comprising a separation membrane having a porous support whose pores contain a water swellable gel, the gel including a first water absorbent polymer and a second polymer which is interwoven with the first polymer to improve the water absorbing and transfer capability of the gel. Both the first and second polymer can be cross-linked and can be based on a poly acrylic acid polymer. The article entitled "Separation performance of asymmetric membranes based on PEGDa/PEI semi-interpenetrating polymer network in pure and binary gas mixtures of CO₂, N₂ and CH₄", by S. Saimani et al., Journal of Membrane Science, 362 (2010), pages 353-359, describes symmetric membranes of semi-interpenetrating polymer networks (semi-IPN) prepared with commercial poly (ether imide) and poly (ethylene glycol) diacrylate (PEGDa) in 1-methyl-2-pyrrolidinone (NMP) for the separation of gasses in binary mixtures of carbon dioxide in nitrogen or methane.

### [SUMMARY OF THE INVENTION]

### [Problems to be Solved by the Invention]

An object of the present invention is to provide a novel gel useful for gas separation membranes superior in acidic gas selectivity, and the like.

### [Means of Solving the Problems]

The technical object is solved by the subject-matter of claims 1, 18 and 19. Preferred embodiments of the present invention are the subject-matter of dependent claims. In particular, aspects of the present invention and preferred embodiments relate to:
[1] A gel having an interpenetrating network formed from a first network structure and a second network structure,
   the first network structure being composed of a first crosslinked polymer formed from at least one noncrosslinkable compound selected from the group consisting of a compound represented by the following formula (I) and a compound represented by the following formula (II), and at least one crosslinkable compound selected from the group consisting of a compound represented by the following formula (III) and a compound represented by the following formula (IV), and
   the second network structure being composed of a second crosslinked polymer having at least one selected from the group consisting of an acidic dissociative group, an acidic dissociative group in a salt form, and a derivative group of an acidic dissociative group: 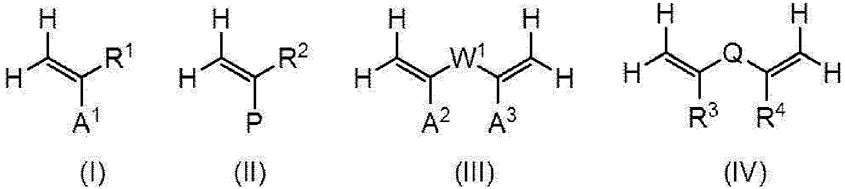 wherein
      R¹ - R⁴ are each independently a hydrogen atom or a substituent,
      A¹ - A³ are each independently an acidic dissociative group, an acidic dissociative group in a salt form, or a derivative group of an acidic dissociative group.
      P is an aryl group having at least one selected from the group consisting of an acidic dissociative group, an acidic dissociative group in a salt form, and a derivative group of an acidic dissociative group,
      W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group, and
      Q is an arenediyl group having at least one selected from the group consisting of an acidic dissociative group, an acidic dissociative group in a salt form, and a derivative group of an acidic dissociative group.
      A derivative group of an acidic dissociative group is a group that forms the acidic dissociative group or the acidic dissociative group in a salt form when hydrolyzed.
      The gel further comprises a basic compound.
      The second crosslinked polymer is an acrylic acid-based crosslinked polymer having at least one selected from the group consisting of a carboxy group, a carboxy group in a salt form, and a derivative group of a carboxy group
[2] The gel of the aforementioned [1] wherein R¹ - R⁴ are each independently a hydrogen atom, an alkyl group optionally having substituent(s) or an aryl group optionally having substituent(s).
[3] The gel of the aforementioned [1] wherein R¹ - R⁴ are each independently a hydrogen atom, a C₁₋₆ alkyl group optionally having substituent(s) or a C₆₋₁₄ aryl group optionally having substituent(s).
[4] The gel of the aforementioned [1] wherein R¹ - R⁴ are each independently a hydrogen atom, a C₁₋₆ alkyl group or a C₆₋₁₄ aryl group.
[5] The gel of the aforementioned [1] wherein R¹ - R⁴ are each independently a hydrogen atom or a C₁₋₆ alkyl group.
[6] The gel of the aforementioned [1] wherein R¹ - R⁴ are each a hydrogen atom.
[7] The gel of any one of the aforementioned [1] to [6] wherein A¹ is a carboxy group, a sulfo group, a phosphono group, a carboxy group in an alkali metal salt form, a sulfo group in an alkali metal salt form, a phosphono group in an alkali metal salt form, or a carbamoyl group optionally having substituent(s).
[8] The gel of any one of the aforementioned [1] to [6] wherein A¹ is a carboxy group, a sulfo group, a phosphono group, a carboxy group in an alkali metal salt form, a sulfo group in an alkali metal salt form, a phosphono group in an alkali metal salt form, or a C₁₋₆ monoalkyl-carbamoyl group optionally having substituent(s).
[9] The gel of any one of the aforementioned [1] to [6] wherein A¹ is a carboxy group, a phosphono group, a carboxy group in an alkali metal salt form, or a phosphono group in an alkali metal salt form.
[10] The gel of any one of the aforementioned [1] to [9] wherein A² and A³ are each independently a carboxy group, a sulfo group, a phosphono group, a carboxy group in an alkali metal salt form, a sulfo group in an alkali metal salt form, a phosphono group in an alkali metal salt form, or a C₁₋₆ alkoxy-carbonyl group.
[11] The gel of any one of the aforementioned [1] to [9] wherein A² and A³ are each independently a carboxy group, a sulfo group, a phosphono group, a carboxy group in an alkali metal salt form, a sulfo group in an alkali metal salt form, or a phosphono group in an alkali metal salt form.
[12] The gel of any one of the aforementioned [1] to [9] wherein A² and A³ are each independently a carboxy group or a carboxy group in an alkali metal salt form.
[13] The gel of any one of the aforementioned [1] to [12] wherein W¹ is an alkylene group optionally having substituent(s) or a cycloalkanediyl group optionally having substituent(s).
[14] The gel of any one of the aforementioned [1] to [12] wherein W¹ is an alkylene group optionally having substituent(s).
[15] The gel of any one of the aforementioned [1] to [12] wherein W¹ is a C₁₋₆ alkylene group optionally having substituent(s).
[16] The gel of any one of the aforementioned [1] to [12] wherein W¹ is a C₁₋₆ alkylene group.
[17] The gel of any one of the aforementioned [1] to [16] wherein P is a C₆₋₁₄ aryl group having at least one selected from the group consisting of a carboxy group, a sulfo group, a phosphono group, a carboxy group in an alkali metal salt form, a sulfo group in an alkali metal salt form, a phosphono group in an alkali metal salt form, and a C₁₋₆ alkoxy-carbonyl group optionally having substituent(s).
[18] The gel of any one of the aforementioned [1] to [16] wherein P is a phenyl group having at least one selected from the group consisting of a carboxy group, a sulfo group, a phosphono group, a carboxy group in an alkali metal salt form, a sulfo group in an alkali metal salt form, and a phosphono group in an alkali metal salt form.
[19] The gel of any one of the aforementioned [1] to [16] wherein P is a phenyl group having at least one selected from the group consisting of a sulfo group and a sulfo group in an alkali metal salt form.
[20] The gel of any one of the aforementioned [1] to [19] wherein Q is an arenediyl group having at least one selected from the group consisting of a carboxy group, a sulfo group, a phosphono group, a carboxy group in an alkali metal salt form, a sulfo group in an alkali metal salt form, a phosphono group in an alkali metal salt form, and a C₁₋₆ alkoxy-carbonyl group.
[21] The gel of any one of the aforementioned [1] to [19] wherein Q is a benzenediyl group having at least one selected from the group consisting of a carboxy group, a sulfo group, a phosphono group, a carboxy group in an alkali metal salt form, a sulfo group in an alkali metal salt form, and a phosphono group in an alkali metal salt form.
[22] The gel of any one of the aforementioned [1] to [19] wherein Q is a benzenediyl group having at least one selected from the group consisting of a sulfo group and a sulfo group in an alkali metal salt form.
[23] The gel of any one of the aforementioned [1] to [22] wherein the second crosslinked polymer is an acrylic acid-based crosslinked polymer having at least one selected from the group consisting of a carboxy group, a carboxy group in a salt form, and a derivative group of a carboxy group.
[24] The gel of any one of the aforementioned [1] to [22] wherein the second crosslinked polymer has at least one selected from the group consisting of a carboxy group, a carboxy group in an alkali metal salt form, and a C₁₋₆ alkoxy-carbonyl group optionally having substituent(s).
[25] The gel of any one of the aforementioned [1] to [22] wherein the second crosslinked polymer has at least one selected from the group consisting of a carboxy group and a carboxy group in an alkali metal salt form.
[26] The gel of any one of the aforementioned [1] to [25] wherein a 0.2 wt% aqueous solution of the second crosslinked polymer has a viscosity of 500 to 50,000 mPa•s.
[27] The gel of any one of the aforementioned [1] to [25] wherein a 0.2 wt% aqueous solution of the second crosslinked polymer has a viscosity of 800 to 45,000 mPa•s.
[28] The gel of any one of the aforementioned [1] to [25] wherein a 0.2 wt% aqueous solution of the second crosslinked polymer has a viscosity of 1,000 to 40,000 mPa•s.
[29] The gel of any one of the aforementioned [1] to [28] wherein the first crosslinked polymer has at least one selected from the group consisting of a carboxy group, a sulfo group, a phosphono group, a carboxy group in a salt form, a sulfo group in a salt form, a phosphono group in a salt form, a derivative group of a carboxy group, a derivative group of a sulfo group and a derivative group of a phosphono group.
[30] The gel of any one of the aforementioned [1] to [28] wherein the first crosslinked polymer has at least one selected from the group consisting of a carboxy group, a sulfo group, a phosphono group, a carboxy group in an alkali metal salt form, a sulfo group in an alkali metal salt form, a phosphono group in an alkali metal salt form, a C₁₋₆ alkoxy-carbonyl group optionally having substituent(s), and a carbamoyl group optionally having substituent(s).
[31] The gel of any one of the aforementioned [1] to [28] wherein the first crosslinked polymer has at least one selected from the group consisting of a carboxy group, a sulfo group, a phosphono group, a carboxy group in an alkali metal salt form, a sulfo group in an alkali metal salt form, a phosphono group in an alkali metal salt form, and a carbamoyl group optionally having substituent(s).
[32] The gel of any one of the aforementioned [1] to [28] wherein the first crosslinked polymer has at least one selected from the group consisting of a carboxy group, a sulfo group, a phosphono group, a carboxy group in an alkali metal salt form, a sulfo group in an alkali metal salt form, and a phosphono group in an alkali metal salt form.
[33] The gel of any one of the aforementioned [1] to [32] wherein the noncrosslinkable compound is at least one selected from the group consisting of acrylic acid, methacrylic acid, vinylsulfonic acid, vinylphosphonic acid, styrene sulfonic acid, and salts and derivatives thereof.
[34] The gel of any one of the aforementioned [1] to [32] wherein the noncrosslinkable compound is at least one selected from the group consisting of acrylic acid, methacrylic acid, vinylsulfonic acid, vinylphosphonic acid, p-styrene sulfonic acid, and salts and derivatives thereof.
[35] The gel of any one of the aforementioned [1] to [32] wherein the noncrosslinkable compound is at least one selected from the group consisting of acrylic acid, vinylphosphonic acid, p-styrene sulfonic acid, and salts and derivatives thereof.
[36] The gel of any one of the aforementioned [1] to [32] wherein the noncrosslinkable compound is at least one selected from the group consisting of acrylic acid, vinylphosphonic acid, p-styrene sulfonic acid, 2-acrylamido-2-methylpropanesulfonic acid, an alkali metal salt of acrylic acid, an alkali metal salt of vinylphosphonic acid, an alkali metal salt of p-styrene sulfonic acid, and an alkali metal salt of 2-acrylamido-2-methylpropanesulfonic acid.
[37] The gel of any one of the aforementioned [1] to [32] wherein the noncrosslinkable compound is at least one selected from the group consisting of acrylic acid and an alkali metal salt of acrylic acid.
[38] The gel of any one of the aforementioned [1] to [37] wherein the compound represented by the formula (III) is a compound represented by the formula (III-1): 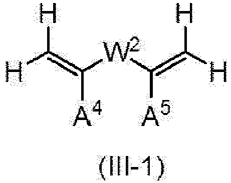 wherein
   A⁴ and A⁵ are each independently a carboxy group, a carboxy group in a salt form, or a derivative group of a carboxy group and
   W² is an alkylene group optionally having substituent(s) or a cycloalkanediyl group optionally having substituent(s), and
   the compound represented by the formula (IV) is at least one selected from the group consisting of divinylbenzene sulfonic acid, and a salt and a derivative thereof.
[39] The gel of the aforementioned [38] wherein the compound represented by the formula (IV) is at least one selected from the group consisting of divinylbenzene sulfonic acid, an alkali metal salt of divinylbenzene sulfonic acid, and a C₁₋₆ alkyl divinylbenzene sulfonate.
[40] The gel of the aforementioned [38] wherein the compound represented by the formula (IV) is at least one selected from the group consisting of divinylbenzene sulfonic acid and an alkali metal salt of divinylbenzene sulfonic acid.
[41] The gel of any one of the aforementioned [1] to [32] wherein the noncrosslinkable compound is at least one selected from the group consisting of acrylic acid, and a salt and a derivative thereof, and the crosslinkable compound is a compound represented by the formula (III-1): 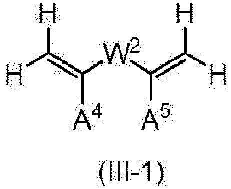 wherein
   A⁴ and A⁵ are each independently a carboxy group, a carboxy group in a salt form, or a derivative group of a carboxy group and
   W² is an alkylene group optionally having substituent(s) or a cycloalkanediyl group optionally having substituent(s).
[42] The gel of the aforementioned [41] wherein the noncrosslinkable compound is at least one selected from the group consisting of acrylic acid and an alkali metal salt of acrylic acid.
[43] The gel of any one of the aforementioned [38] to [42] wherein the A⁴ and A⁵ are each independently a carboxy group, a carboxy group in an alkali metal salt form, or a C₁₋₆ alkoxy-carbonyl group.
[44] The gel of any one of the aforementioned [38] to [42] wherein the A⁴ and A⁵ are each independently a carboxy group or a carboxy group in an alkali metal salt form.
[45] The gel of any one of the aforementioned [38] to [44] wherein the W² is an alkylene group optionally having substituent(s).
[46] The gel of any one of the aforementioned [38] to [44] wherein the W² is a C₁₋₁₀ alkylene group optionally having substituent(s).
[47] The gel of any one of the aforementioned [38] to [44] wherein the W² is a C₁₋₁₀ alkylene group.
[48] The gel of any one of the aforementioned [38] to [44] wherein the W² is a C₁₋₆ alkylene group.
[49] The gel of any one of the aforementioned [1] to [48] wherein an amount of the first crosslinked polymer is 10 to 200 parts by weight per 100 parts by weight of the second crosslinked polymer.
[50] The gel of any one of the aforementioned [1] to [48] wherein an amount of the first crosslinked polymer is 10 to 180 parts by weight per 100 parts by weight of the second crosslinked polymer.
[51] The gel of any one of the aforementioned [1] to [48] wherein an amount of the first crosslinked polymer is 10 to 150 parts by weight per 100 parts by weight of the second crosslinked polymer.
[52] The gel of any one of the aforementioned [1] to [51] wherein an amount of the crosslinkable compound is 0.01 to 20 mol% relative to the total of the crosslinkable compound and the noncrosslinkable compound.
[53] The gel of any one of the aforementioned [1] to [51] wherein an amount of the crosslinkable compound is 0.01 to 15 mol% relative to the total of the crosslinkable compound and the noncrosslinkable compound.
[54] The gel of any one of the aforementioned [1] to [51] wherein an amount of the crosslinkable compound is 0.05 to 15 mol% relative to the total of the crosslinkable compound and the noncrosslinkable compound.
[55] The gel of any one of the aforementioned [1] to [51] wherein an amount of the crosslinkable compound is 0.1 to 15 mol% relative to the total of the crosslinkable compound and the noncrosslinkable compound.
[56] The gel of any one of the aforementioned [1] to [51] wherein an amount of the crosslinkable compound is 0.1 to 10 mol% relative to the total of the crosslinkable compound and the noncrosslinkable compound.
[57] The gel of any one of the aforementioned [1] to [56] further comprising a basic compound.
[58] The gel of the aforementioned [57] wherein the basic compound is at least one selected from the group consisting of carbonate, hydrogen carbonate and hydroxide of an alkali metal, and amines.
[59] The gel of the aforementioned [57] wherein the basic compound is at least one selected from the group consisting of carbonate, hydrogen carbonate and hydroxide of at least one alkali metal selected from the group consisting of Li, Na, K, Rb, and Cs.
[60] The gel of the aforementioned [57] wherein the basic compound is at least one selected from the group consisting of cesium carbonate and cesium hydroxide.
[61] The gel of any one of the aforementioned [57] to [60] wherein an amount of the basic compound is 0.1 to 5 mol per 1 mol of the total of the acidic dissociative group, the acidic dissociative group in a salt form, and the derivative group of an acidic dissociative group, each possessed by the first crosslinked polymer and the second crosslinked polymer.
[62] The gel of any one of the aforementioned [57] to [60] wherein an amount of the basic compound is 0.1 to 4.5 mol per 1 mol of the total of the acidic dissociative group, the acidic dissociative group in a salt form, and the derivative group of an acidic dissociative group, each possessed by the first crosslinked polymer and the second crosslinked polymer.
[63] The gel of any one of the aforementioned [57] to [60] wherein an amount of the basic compound is 0.1 to 4 mol per 1 mol of the total of the acidic dissociative group, the acidic dissociative group in a salt form, and the derivative group of an acidic dissociative group, each possessed by the first crosslinked polymer and the second crosslinked polymer.
[64] The gel of any one of the aforementioned [57] to [60] wherein an amount of the basic compound is 0.2 to 4 mol per 1 mol of the total of the acidic dissociative group, the acidic dissociative group in a salt form, and the derivative group of an acidic dissociative group, each possessed by the first crosslinked polymer and the second crosslinked polymer.
[65] The gel of any one of the aforementioned [57] to [60] wherein an amount of the basic compound is 0.2 to 3.5 mol per 1 mol of the total of the acidic dissociative group, the acidic dissociative group in a salt form, and the derivative group of an acidic dissociative group, each possessed by the first crosslinked polymer and the second crosslinked polymer.
[66] The gel of any one of the aforementioned [57] to [60] wherein an amount of the basic compound is 1 to 5 mol per 1 mol of the total of the acidic dissociative group and the derivative group of an acidic dissociative group, each possessed by the first crosslinked polymer and the second crosslinked polymer.
[67] The gel of any one of the aforementioned [57] to [60] wherein an amount of the basic compound is 1 to 4.5 mol per 1 mol of the total of the acidic dissociative group and the derivative group of an acidic dissociative group, each possessed by the first crosslinked polymer and the second crosslinked polymer.
[68] The gel of any one of the aforementioned [57] to [60] wherein an amount of the basic compound is 1 to 4 mol per 1 mol of the total of the acidic dissociative group and the derivative group of an acidic dissociative group, each possessed by the first crosslinked polymer and the second crosslinked polymer.
[69] The gel of any one of the aforementioned [57] to [60] wherein an amount of the basic compound is 1 to 3.5 mol per 1 mol of the total of the acidic dissociative group and the derivative group of an acidic dissociative group, each possessed by the first crosslinked polymer and the second crosslinked polymer.
[70] A separation membrane comprising the gel of any one of the aforementioned [1] to [69].
[71] The separation membrane of the aforementioned [70] further comprising a porous membrane.
[72] A separation apparatus comprising the separation membrane of the aforementioned [70] or [71].
[73] A method for separating at least one gas comprising contacting a mixed gas comprising at least two gasses with the separation membrane of the aforementioned [70] or [71].
[74] A method for producing a gel having an interpenetrating network formed from a first network structure composed of a first crosslinked polymer and a second network structure composed of a second crosslinked polymer having at least one selected from the group consisting of an acidic dissociative group, an acidic dissociative group in a salt form and a derivative group of an acidic dissociative group, comprising a step of forming the first crosslinked polymer by polymerizing at least one noncrosslinkable compound selected from the group consisting of a compound represented by the following formula (I) and a compound represented by the following formula (II), and at least one crosslinkable compound selected from the group consisting of a compound represented by the following formula (III) and a compound represented by the following formula (IV) in a mixture comprising water and the second crosslinked polymer, and a basic compound: 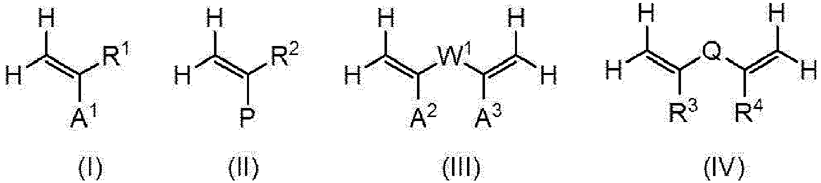 wherein
   R¹ - R⁴ are each independently a hydrogen atom or a substituent,
   A¹ - A³ are each independently an acidic dissociative group, an acidic dissociative group in a salt form, or a derivative group of an acidic dissociative group.
   P is an aryl group having at least one selected from the group consisting of an acidic dissociative group, an acidic dissociative group in a salt form, and a derivative group of an acidic dissociative group,
   W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group, and
   Q is an arenediyl group having at least one selected from the group consisting of an acidic dissociative group, an acidic dissociative group in a salt form, and a derivative group of an acidic dissociative group.
   A derivative group of an acidic dissociative group is a group that forms the acidic dissociative group or the acidic dissociative group in a salt form when hydrolyzed.
   The second crosslinked polymer is an acrylic acid-based crosslinked polymer having at least one selected from the group consisting of a carboxy group, a carboxy group in a salt form, and a derivative group of a carboxy group
[75] A method for producing a separation membrane comprising a gel having an interpenetrating network formed from a first network structure composed of a first crosslinked polymer and a second network structure composed of a second crosslinked polymer having at least one selected from the group consisting of an acidic dissociative group, an acidic dissociative group in a salt form and a derivative group of an acidic dissociative group, comprising
   a step of forming a coated film by applying a mixture comprising water, a basic compound, at least one noncrosslinkable compound selected from the group consisting of a compound represented by the following formula (I) and a compound represented by the following formula (II), and at least one crosslinkable compound selected from the group consisting of a compound represented by the following formula (III) and a compound represented by the following formula (IV), and the second crosslinked polymer to a substrate, and
   a step of forming the first crosslinked polymer by polymerizing the noncrosslinkable compound and the crosslinkable compound: 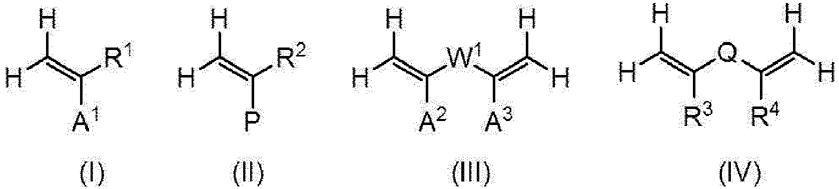 wherein
      R¹ - R⁴ are each independently a hydrogen atom or a substituent,
      A¹ - A³ are each independently an acidic dissociative group, an acidic dissociative group in a salt form, or a derivative group of an acidic dissociative group.
      P is an aryl group having at least one selected from the group consisting of an acidic dissociative group, an acidic dissociative group in a salt form, and a derivative group of an acidic dissociative group,
      W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group, and
      Q is an arenediyl group having at least one selected from the group consisting of an acidic dissociative group, an acidic dissociative group in a salt form, and a derivative group of an acidic dissociative group.
      A derivative group of an acidic dissociative group is a group that forms the acidic dissociative group or the acidic dissociative group in a salt form when hydrolyzed.
      The second crosslinked polymer is an acrylic acid-based crosslinked polymer having at least one selected from the group consisting of a carboxy group, a carboxy group in a salt form, and a derivative group of a carboxy group.
[76] The method of the aforementioned [75] wherein the substrate is a porous membrane.
[77] The method of any one of the aforementioned [74] to [76] wherein the gel is a gel of any one of the aforementioned [1] to [56].
[78] The method of any one of the aforementioned [74] to [76] wherein the mixture further comprises a basic compound.
[79] The method of the aforementioned [78] wherein the gel is a gel of any one of the aforementioned [57] to [69].
[80] The method of any one of the aforementioned [74] to [77] wherein the crosslinkable compound and the noncrosslinkable compound are polymerized by photo-radical polymerization.

### [Effect of the Invention]

Using the gel of the present invention, a gas separation membrane superior in the acidic gas selectivity can be obtained.

### [Brief Description of the Drawings]

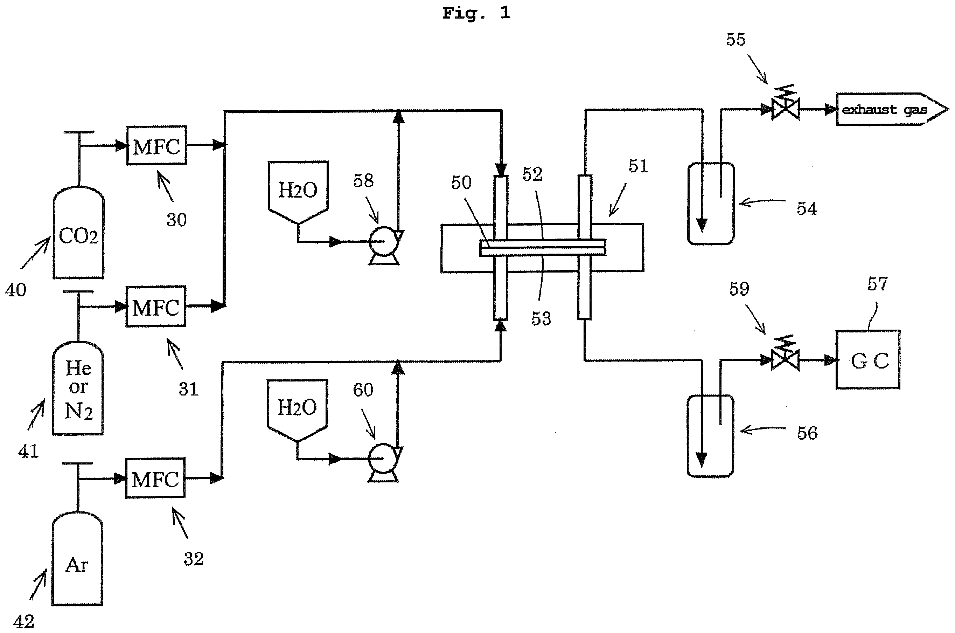

Fig. 1 is a schematic drawing of the gas separation apparatus provided with the gas separation membrane module used for evaluation of the gas separation performance of the gas separation membranes obtained in the Examples and Comparative Examples.

### [Description of Embodiments]

### <Definition>

The definitions of the groups and the like in the present specification are explained in order.

"C_{x-y}" means that the carbon number is not less than x and not more than y (x and y show numbers).

Examples of the alkali metal include lithium, sodium, potassium, rubidium and cesium. Of these, potassium, rubidium or cesium is preferable, and potassium or cesium is more preferable.

Examples of the halogen atom include fluorine atom, chlorine atom, bromine atom and iodine atom.

The alkyl group may be either linear or branched chain. The carbon number of the alkyl group is preferably 1 to 30, more preferably 1 to 20, further preferably 1 to 10, particularly preferably 1 to 6. Examples of the alkyl group include methyl group, ethyl group, propyl group, isopropyl group, butyl group, isobutyl group, sec-butyl group, tert-butyl group, pentyl group, isopentyl group, neopentyl group, 1-ethylpropyl group, hexyl group, isohexyl group, 1,1-dimethylbutyl group, 2,2-dimethylbutyl group, 3,3-dimethylbutyl group and 2-ethylbutyl group. The alkyl group optionally has substituent(s). Examples of the substituent thereof include halogen atom, hydroxy group, amino group optionally having substituent(s), sulfo group, sulfo group in salt form and derivative group of sulfo group.

The sulfo group in a salt form is -S(O)₂(OM²) wherein M² is a cation different from a proton (hereinafter sometimes to be abbreviated as "other cation"). Examples of other cation include metal ion and ammonium ion. Examples of the metal ion include alkali metal ion. The other cation is preferably an alkali metal ion, more preferably a potassium ion or a cesium ion.

Examples of the derivative group of a sulfo group include -S(O)₂(OR^{a2}) wherein R^{a2} is an alkyl group optionally having substituent(s), a cycloalkyl group optionally having substituent(s), an aryl group optionally having substituent(s) or an aralkyl group optionally having substituent(s).

The carbon number of the cycloalkyl group is preferably 3 to 30, more preferably 3 to 20, particularly preferably 3 to 10. Examples of the cycloalkyl group include cyclopropyl group, cyclobutyl group, cyclopentyl group, cyclohexyl group, cycloheptyl group, cyclooctyl group, bicyclo[2.2.1]heptyl group, bicyclo[2.2.2]octyl group, bicyclo[3.2.1]octyl group and adamantyl group. The cycloalkyl group optionally has substituent(s). Examples of the substituent thereof include halogen atom, hydroxy group, alkyl group optionally having substituent(s), and amino group optionally having substituent(s).

The carbon number of the aryl group is preferably 6 to 18, more preferably 6 to 14. Examples of the aryl group include phenyl group, 1-naphthyl group, 2-naphthyl group, 1-anthryl group, 2-anthryl group and 9-anthryl group. The aryl group optionally has substituent(s). Examples of the substituent thereof include halogen atom, hydroxy group, alkyl group optionally having substituent(s), and amino group optionally having substituent(s).

The carbon number of the aralkyl group is preferably 7 to 16. Examples of the aralkyl group include benzyl group, phenethyl group, naphthylmethyl group and phenylpropyl group. The aralkyl group optionally has substituent(s). Examples of the substituent thereof include halogen atom, hydroxy group and alkyl group optionally having substituent(s) and amino group optionally having substituent(s).

Examples of the heterocyclic group include (i) an aromatic heterocyclic group and (ii) a non-aromatic heterocyclic group, each containing, as a ring-constituting atom besides carbon atom, 1 to 4 hetero atoms selected from a nitrogen atom, a sulfur atom and an oxygen atom. The heterocyclic group optionally has substituent(s). Examples of the substituent thereof include halogen atom, hydroxy group and alkyl group optionally having substituent(s).

Examples of the aromatic heterocyclic group include a 5-to 14-membered (preferably 5- to 10-membered) aromatic heterocyclic group containing, as a ring-constituting atom besides carbon atom, 1 to 4 hetero atoms selected from a nitrogen atom, a sulfur atom and an oxygen atom.

Preferable examples of the aromatic heterocyclic group include the following:
5 to 6-membered monocyclic aromatic heterocyclic groups such as thienyl group, furyl group, pyrrolyl group, imidazolyl group, pyrazolyl group, thiazolyl group, isothiazolyl group, oxazolyl group, isoxazolyl group, pyridyl group, pyrazinyl group, pyrimidinyl group, pyridazinyl group, 1,2,4-oxadiazolyl group, 1,3,4-oxadiazolyl group, 1,2,4-thiadiazolyl group, 1,3,4-thiadiazolyl group, triazolyl group, tetrazolyl group, triazinyl group and the like;
8 to 14-membered fused polycyclic (preferably bi or tricyclic) aromatic heterocyclic groups such as benzothiophenyl, benzofuranyl group, benzimidazolyl group, benzoxazolyl group, benzoisooxazolyl group, benzothiazolyl group, benzoisothiazolyl group, benzotriazolyl group, imidazopyridinyl group, thienopyridinyl group, furopyridinyl group, pyrrolopyridinyl group, pyrazolopyridinyl group, oxazolopyridinyl group, thiazolopyridinyl group, imidazopyrazinyl group, imidazopyrimidinyl group, thienopyrimidinyl group, furopyrimidinyl group, pyrrolopyrimidinyl group, pyrazolopyrimidinyl group, oxazolopyrimidinyl group, thiazolopyrimidinyl group, pyrazolotriazinyl group, naphto[2,3-b]thienyl group, phenoxathiinyl group, indolyl group, isoindolyl group, 1H-indazolyl group, purinyl group, isoquinolyl group, quinolyl group, phthalazinyl group, naphthyridinyl group, quinoxalinyl group, quinazolinyl group, cinnolinyl group, carbazolyl group, β-carbolinyl group, phenanthridinyl group, acrydinyl group, phenazinyl group, phenothiazinyl group, phenoxazinyl group and the like.

Preferable examples of the non-aromatic heterocyclic group include the following:
3 to 8-membered monocyclic non-aromatic heterocyclic groups such as aziridinyl group, oxiranyl group, thiiranyl group, azetidinyl group, oxetanyl group, thietanyl group, tetrahydrothienyl group, tetrahydrofuranyl group, pyrrolinyl group, pyrrolidinyl group, imidazolinyl group, imidazolidinyl group, oxazolinyl group, oxazolidinyl group, pyrazolinyl group, pyrazolidinyl group, thiazolinyl group, thiazolidinyl group, tetrahydroisothiazolyl group, tetrahydrooxazolyl group, tetrahydroisooxazolyl group, piperidinyl group, piperazinyl group, tetrahydropyridinyl group, dihydropyridinyl group, dihydrothiopyranyl group, tetrahydropyrimidinyl group, tetrahydropyridazinyl group, dihydropyranyl group, tetrahydropyranyl group, tetrahydrothiopyranyl group, morpholinyl group, thiomorpholinyl group, azepanyl group, diazepanyl group, azepinyl group, oxepanyl group, azocanyl group, diazocanyl group;
9 to 14-membered fused polycyclic (preferably bi or tricyclic) non-aromatic heterocyclic groups such as dihydrobenzofuranyl group, dihydrobenzoimidazolyl group, dihydrobenzooxazolyl group, dihydrobenzothiazolyl group, dihydrobenzoisothiazolyl group, dihydronaphto[2,3-b]thienyl group, tetrahydroisoquinolyl group, tetrahydroquinolyl group, 4H-quinolizinyl group, indolinyl group, isoindolinyl group, tetrahydrothieno[2,3-c]pyridinyl group, tetrahydrobenzoazepinyl group, tetrahydroquinoxalinyl group, tetrahydrophenanthridinyl group, hexahydrophenothiazinyl group, hexahydrophenoxazinyl group, tetrahydrophthalazinyl group, tetrahydronaphthyridinyl group, tetrahydroquinazolinyl group, tetrahydrocinnolinyl group, tetrahydrocarbazolyl group, tetrahydro-β-carbolinyl group, tetrahydroacrydinyl group, tetrahydrophenazinyl group, tetrahydrothioxanthenyl group, octahydroisoquinolyl group and the like.

The alkylene group may be either linear or branched chain. The carbon number of the alkylene group is preferably 1 to 30, more preferably 1 to 20, further preferably 1 to 10, particularly preferably 1 to 6. Examples of the alkylene group include -CH₂-, - (CH₂)₂-, - (CH₂)₃-, - (CH₂)₄-, - (CH₂)₅-, - (CH₂)₆-, - CH(CH₃)-, -C(CH₃)₂-, -CH(C₂H₅)-, -CH(C₃H₇)-, -CH(CH(CH₃)₂)-, - (CH(CH₃))₂-, -CH₂-CH(CH₃)-, -CH(CH₃)-CH₂-, -CH₂-CH₂-C(CH₃)₂-, - C(CH₃)₂-CH₂-CH₂-, -CH₂-CH₂-CH₂-C(CH₃)₂- and -C(CH₃)₂-CH₂-CH₂-CH₂-. The alkylene group optionally has substituent(s). Examples of the substituent thereof include halogen atom and hydroxy group.

The carbon number of the cycloalkanediyl group is preferably 3 to 30, more preferably 3 to 20, particularly preferably 3 to 10. Examples of the cycloalkanediyl group include cyclopropanediyl group, cyclobutanediyl group (e.g., cyclobutane-1,3-diyl group), cyclopentanediyl group (e.g., cyclopentane-1,3-diyl group), cyclohexanediyl group (e.g., cyclohexane-1,4-diyl group) and cycloheptanediyl group (e.g., cycloheptane-1,4-diyl group). The cycloalkanediyl group optionally has substituent(s). Examples of the substituent thereof include halogen atom, hydroxy group and alkyl group optionally having substituent(s).

The carbon number of the arenediyl group is preferably 6 to 18, more preferably 6 to 14. Examples of the arenediyl group include benzenediyl group (e.g., benzene-1,4-diyl group), naphthalenediyl group (e.g., naphthalene-1,4-diyl group), phenanthrenediyl group (e.g., phenanthrene-1,6-diyl group) and anthracenediyl group (e.g., anthracene-2,6-diyl group). The arenediyl group optionally has substituent(s). Examples of the substituent thereof include halogen atom, hydroxy group and alkyl group optionally having substituent(s).

Examples of the divalent group being a combination of at least two selected from the group consisting of an alkylene group, a cycloalkanediyl group and an arenediyl group include a group wherein -CH₂- and a cyclohexanediyl group are bonded, a group wherein -CH₂-, a cyclohexanediyl group and -CH₂- are bonded, a group wherein -CH₂- and a benzenediyl group are bonded, and a group wherein -CH₂-, a benzenediyl group and - CH₂- are bonded. The divalent group optionally has substituent(s). Examples of the substituent thereof include halogen atom and hydroxy group.

The explanation of an alkyl group as one part of the alkoxy group (i.e., alkyloxy group) is as mentioned above. The explanation of an alkyl group as one part of the below-mentioned group is also as mentioned above. Preferable examples of the alkoxy group include methoxy group, ethoxy group, propoxy group, isopropoxy group, butoxy group, isobutoxy group, sec-butoxy group, tert-butoxy group, pentyloxy group and hexyloxy group. The alkoxy group optionally has substituent(s). Examples of the substituent thereof include halogen atom and hydroxy group.

The explanation of a cycloalkyl group as one part of the cycloalkyloxy group is as mentioned above. The explanation of a cycloalkyl group as one part of the below-mentioned group is also as mentioned above. Preferable examples of the cycloalkyloxy group include cyclopropyloxy group, cyclobutyloxy group, cyclopentyloxy group, cyclohexyloxy group, cycloheptyloxy group and cyclooctyloxy group. The cycloalkyloxy group optionally has substituent(s). Examples of the substituent thereof include halogen atom, hydroxy group and alkyl group optionally having substituent(s).

The explanation of an aryl group as one part of the aryloxy group is as mentioned above. The explanation of an aryl group as one part of the below-mentioned group is also as mentioned above. Preferable examples of the aryloxy group include phenyloxy group, 1-naphthyloxy group and 2-naphthyloxy group. The aryloxy group optionally has substituent(s). Examples of the substituent thereof include halogen atom, hydroxy group and alkyl group optionally having substituent(s).

The explanation of an aralkyl group as one part of the aralkyloxy group is as mentioned above. The explanation of an aralkyl group as one part of the below-mentioned group is also as mentioned above. Preferable examples of the aralkyloxy group include benzyloxy group, phenethyloxy group, naphthylmethyloxy group and phenylpropyloxy group. The aralkyloxy group optionally has substituent(s). Examples of the substituent thereof include halogen atom, hydroxy group and alkyl group optionally having substituent(s).

The explanation of a heterocyclic group in the heterocyclic oxy group is as mentioned above. The explanation of a heterocyclic group as one part of the below-mentioned group is also as mentioned above. Preferable examples of the heterocyclic oxy group include pyridyloxy group, pyrazyloxy group, pyrimidyloxy group, quinolyloxy group. The heterocyclic oxy group optionally has substituent(s). Examples of the substituent thereof include halogen atom, hydroxy group and alkyl group optionally having substituent(s).

Preferable examples of the alkylthio group include methylthio group, ethylthio group, propylthio group, isopropylthio group, butylthio group, sec-butylthio group, tert-butylthio group, pentylthio group and hexylthio group. The alkylthio group optionally has substituent(s). Examples of the substituent thereof include halogen atom and hydroxy group.

Preferable examples of the cycloalkylthio group include cyclopentylthio group, cyclohexylthio group and cycloheptylthio group. The cycloalkylthio group optionally has substituent(s). Examples of the substituent thereof include halogen atom, hydroxy group and alkyl group optionally having substituent(s).

Preferable examples of the arylthio group include phenylthio group and naphthylthio group. The arylthio group optionally has substituent(s). Examples of the substituent thereof include halogen atom, hydroxy group and alkyl group optionally having substituent(s).

Preferable examples of the aralkylthio group include benzylthio group and phenethylthio group. The aralkylthio group optionally has substituent(s). Examples of the substituent thereof include halogen atom, hydroxy group and alkyl group optionally having substituent(s).

Preferable examples of the heterocyclic thio group include pyridylthio group, 2-benzoimidazolylthio group, 2-benzooxazolylthio group and 2-benzothiazolylthio group. The heterocyclic thio group optionally has substituent(s). Examples of the substituent thereof include halogen atom, hydroxy group and alkyl group optionally having substituent(s).

Examples of the amino group optionally having substituent(s) include amino groups optionally having 1 or 2 substituent selected from alkyl group, aryl group, alkyl-carbonyl group, aryl-carbonyl group, aralkyl-carbonyl group, heterocyclic carbonyl group, alkoxy-carbonyl group, heterocyclic group, carbamoyl group, mono- or di-alkylcarbamoyl group, mono- or di-aralkyl-carbamoyl group, alkylsulfonyl group and arylsulfonyl group.

Preferable examples of the amino group optionally having substituent(s) include amino group, mono- or di-alkylamino group (e.g., methylamino group, dimethylamino group, ethylamino group, diethylamino group, propylamino group, dibutylamino group), mono- or di-cycloalkylamino group (e.g., cyclopropylamino group, cyclohexylamino group), mono- or di-arylamino group (e.g., phenylamino group), mono- or di-aralkylamino group (e.g., benzylamino group, dibenzylamino group), mono- or di-alkyl-carbonylamino group (e.g., acetylamino group, propionylamino group), mono- or di-arylcarbonylamino group (e.g., benzoylamino group), mono- or di-aralkyl-carbonylamino group (e.g., benzylcarbonylamino group), mono- or di-heterocyclic carbonylamino group (e.g., nicotinoylamino group, isonicotinoylamino group, piperidinylcarbonylamino group), mono- or di-alkoxycarbonylamino group (e.g., tert-butoxycarbonylamino group), heterocyclic amino group (e.g., pyridylamino group), carbamoylamino group, (mono- or di-alkyl-carbamoyl)amino group (e.g., methylcarbamoylamino group), (mono- or di-aralkyl-carbamoyl)amino group (e.g., benzylcarbamoylamino group), alkylsulfonylamino group (e.g., methylsulfonylamino group, ethylsulfonylamino group), arylsulfonylamino group (e.g., phenylsulfonylamino group), (alkyl) (alkyl-carbonyl)amino group (e.g., N-acetyl-N-methylamino group) and (alkyl)(aryl-carbonyl)amino group (e.g., N-benzoyl-N-methylamino group).

Preferable examples of the alkyl-carbonyl group include acetyl group, propanoyl group, butanoyl group, 2-methylpropanoyl group, pentanoyl group, 3-methylbutanoyl group, 2-methylbutanoyl group, 2,2-dimethylpropanoyl group, hexanoyl group and heptanoyl group. The alkyl-carbonyl group optionally has substituent(s). Examples of the substituent thereof include halogen atom and hydroxy group.

Preferable examples of the cycloalkyl-carbonyl group include cyclobutylcarbonyl group, cyclopentylcarbonyl group, cyclohexylcarbonyl group and cycloheptylcarbonyl group. The cycloalkyl-carbonyl group optionally has substituent(s). Examples of the substituent thereof include halogen atom, hydroxy group and alkyl group optionally having substituent(s).

Preferable examples of the aryl-carbonyl group include benzoyl group, 1-naphthoyl group and 2-naphthoyl group. The aryl-carbonyl group optionally has substituent(s). Examples of the substituent thereof include halogen atom, hydroxy group and alkyl group optionally having substituent(s).

Preferable examples of the aralkyl-carbonyl group include phenylacetyl group and phenylpropionyl group. The aralkyl-carbonyl group optionally has substituent(s). Examples of the substituent thereof include halogen atom, hydroxy group and alkyl group optionally having substituent(s).

Preferable examples of the heterocyclic carbonyl group include nicotinoyl group, isonicotinoyl group, thenoyl group, furoyl group, morpholinylcarbonyl group, piperidinylcarbonyl group and pyrrolidinylcarbonyl group. The heterocyclic carbonyl group optionally has substituent(s). Examples of the substituent thereof include halogen atom, hydroxy group and alkyl group optionally having substituent(s).

Preferable examples of the alkoxy-carbonyl group include methoxycarbonyl group, ethoxycarbonyl group, propoxycarbonyl group, isopropoxycarbonyl group, butoxycarbonyl group, isobutoxycarbonyl group, sec-butoxycarbonyl group, tert-butoxycarbonyl group, pentyloxycarbonyl group and hexyloxycarbonyl group. The alkoxy-carbonyl group optionally has substituent(s). Examples of the substituent thereof include halogen atom, hydroxy group and amino group optionally having substituent(s).

Preferable examples of the alkyl-carbonyloxy group include acetoxy group, propanoyloxy group and butanoyloxy group. The alkyl-carbonyloxy group optionally has substituent(s). Examples of the substituent thereof include halogen atom and hydroxy group.

Preferable examples of the cycloalkyl-carbonyloxy group include cyclobutylcarbonyloxy group, cyclopentylcarbonyloxy group, cyclohexylcarbonyloxy group and cycloheptylcarbonyloxy group. The cycloalkyl-carbonyloxy group optionally has substituent(s). Examples of the substituent thereof include halogen atom, hydroxy group and alkyl group optionally having substituent(s).

Preferable examples of the aryl-carbonyloxy group include benzoyloxy group, 1-naphthoyloxy group and 2-naphthoyloxy group. The aryl-carbonyloxy group optionally has substituent(s). Examples of the substituent thereof include halogen atom, hydroxy group and alkyl group optionally having substituent(s).

Preferable examples of the aralkyl-carbonyloxy group include phenylacetoxy group and phenylpropionyloxy group. The aralkyl-carbonyloxy group optionally has substituent(s). Examples of the substituent thereof include halogen atom, hydroxy group and alkyl group optionally having substituent(s).

Preferable examples of the alkylsulfonyl group include methylsulfonyl group, ethylsulfonyl group, propylsulfonyl group, isopropylsulfonyl group, butylsulfonyl group, sec-butylsulfonyl group and tert-butylsulfonyl group. The alkylsulfonyl group optionally has substituent(s). Examples of the substituent thereof include halogen atom and hydroxy group.

Preferable examples of the cycloalkylsulfonyl group include cyclobutylsulfonyl group, cyclopentylsulfonyl group, cyclohexylsulfonyl group and cycloheptylsulfonyl group. The cycloalkylsulfonyl group optionally has substituent(s). Examples of the substituent thereof include halogen atom, hydroxy group and alkyl group optionally having substituent(s).

Preferable examples of the arylsulfonyl group include phenylsulfonyl group, 1-naphthylsulfonyl group and 2-naphthylsulfonyl group. The arylsulfonyl group optionally has substituent(s). Examples of the substituent thereof include halogen atom, hydroxy group and alkyl group optionally having substituent(s).

Preferable examples of the aralkylsulfonyl group include benzylsulfonyl group and phenethylsulfonyl group. The aralkylsulfonyl group optionally has substituent(s). Examples of the substituent thereof include halogen atom, hydroxy group and alkyl group optionally having substituent(s).

Preferable examples of the alkylsulfinyl group include methylsulfinyl group, ethylsulfinyl group, propylsulfinyl group, isopropylsulfinyl group, butylsulfinyl group, sec-butylsulfinyl group and tert-butylsulfinyl group. The alkylsulfinyl group optionally has substituent(s). Examples of the substituent thereof include halogen atom and hydroxy group.

Preferable examples of the cycloalkylsulfinyl group include cyclobutylsulfinyl group, cyclopentylsulfinyl group, cyclohexylsulfinyl group and cycloheptylsulfinyl group. The cycloalkylsulfinyl group optionally has substituent(s). Examples of the substituent thereof include halogen atom, hydroxy group and alkyl group optionally having substituent(s).

Preferable examples of the arylsulfinyl group include phenylsulfinyl group, 1-naphthylsulfinyl group and 2-naphthylsulfinyl group. The arylsulfinyl group optionally has substituent(s). Examples of the substituent thereof include halogen atom, hydroxy group and alkyl group optionally having substituent(s).

Preferable examples of the aralkylsulfinyl group include benzylsulfinyl group and phenethylsulfinyl group. The aralkylsulfinyl group optionally has substituent(s). Examples of the substituent thereof include halogen atom, hydroxy group and alkyl group optionally having substituent(s).

Examples of the silyl group optionally having substituent(s) include silyl groups optionally having 1 to 3 substituents selected from alkyl group, cycloalkyl group, aryl group and aralkyl group.

Preferable examples of the silyl group optionally having substituent(s) include trimethylsilyl group, tert-butyl(dimethyl)silyl group and triphenylsilyl group.

The explanation of a silyl group optionally having substituent(s) as one part of the silyloxy group optionally having substituent(s) is as mentioned above. The explanation of a silyl group optionally having substituent(s) as one part of the below-mentioned group is as mentioned above. Preferable examples of the silyloxy group optionally having substituent(s) include trimethylsilyloxy group, tert-butyl(dimethyl)silyloxy group and triphenylsilyloxy group.

### (Gel)

The gel of the present invention has an interpenetrating network formed from the first network structure and the second network structure,

the first network structure being composed of a first crosslinked polymer formed from at least one noncrosslinkable compound selected from the group consisting of a compound represented by the following formula (I) and a compound represented by the following formula (II), and at least one crosslinkable compound selected from the group consisting of a compound represented by the following formula (III) and a compound represented by the following formula (IV), and

the second network structure being composed of a second crosslinked polymer having at least one selected from the group consisting of an acidic dissociative group, an acidic dissociative group in a salt form, and a derivative group of an acidic dissociative group: 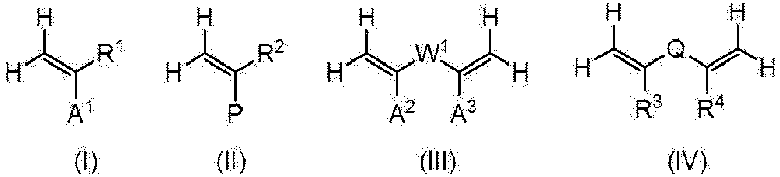 wherein
R¹ - R⁴ are each independently a hydrogen atom or a substituent,
A¹ - A³ are each independently an acidic dissociative group, an acidic dissociative group in a salt form, or a derivative group of an acidic dissociative group.
P is an aryl group having at least one selected from the group consisting of an acidic dissociative group, an acidic dissociative group in a salt form, and a derivative group of an acidic dissociative group,
W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group, and
Q is an arenediyl group having at least one selected from the group consisting of an acidic dissociative group, an acidic dissociative group in a salt form, and a derivative group of an acidic dissociative group.

In the following, the "compound represented by the formula (I)" is sometimes to be abbreviated as "compound (I)". Compounds represented by other formulas are also sometimes abbreviated similarly.

### (Interpenetrating network)

The "interpenetrating network" generally means a structure formed by network structures composed of two or more kinds of crosslinked polymers which are entangled without via a covalent bond. Such structure is also sometimes called an interpenetrating polymer network. In the gel of the present invention, the first network structure composed of the first crosslinked polymer and the second network structure composed of the second crosslinked polymer form an interpenetrating network.

### (First network structure)

In the gel of the present invention, the first network structure is composed of the first crosslinked polymer formed from at least one noncrosslinkable compound selected from the group consisting of compound (I) and compound (II), and at least one crosslinkable compound selected from the group consisting of compound (III) and compound (IV). Only one kind or two or more kinds of each of compound (I), compound (II), compound (III) and compound (IV) may be used.

R¹ - R⁴ in the formula (I), the formula (II) and the formula (IV) are each independently a hydrogen atom or a substituent.

Examples of the substituent for R¹ - R⁴ include halogen atom, hydroxy group, formyl group, cyano group, nitro group, hydrazino group, alkyl group optionally having substituent(s), cycloalkyl group optionally having substituent(s), aryl group optionally having substituent(s), aralkyl group optionally having substituent(s), heterocyclic group optionally having substituent(s), alkoxy group optionally having substituent(s), cycloalkyloxy group optionally having substituent(s), aryloxy group optionally having substituent(s), aralkyloxy group optionally having substituent(s), heterocyclic oxy group optionally having substituent(s), alkylthio group optionally having substituent(s), cycloalkylthio group optionally having substituent(s), arylthio group optionally having substituent(s), aralkylthio group optionally having substituent(s), heterocyclic thio group optionally having substituent(s), amino group optionally having substituent(s), alkyl-carbonyl group optionally having substituent(s), cycloalkyl-carbonyl group optionally having substituent(s), aryl-carbonyl group optionally having substituent(s), aralkyl-carbonyl group optionally having substituent(s), heterocyclic carbonyl group optionally having substituent(s), alkyl-carbonyloxy group optionally having substituent(s), cycloalkyl-carbonyloxy group, aryl-carbonyloxy group, aralkyl-carbonyloxy group, alkylsulfonyl group optionally having substituent(s), cycloalkylsulfonyl group optionally having substituent(s), arylsulfonyl group optionally having substituent(s), aralkylsulfonyl group optionally having substituent(s), alkylsulfinyl group optionally having substituent(s), cycloalkylsulfinyl group optionally having substituent(s), arylsulfinyl group optionally having substituent(s), aralkylsulfinyl group optionally having substituent(s), silyl group optionally having substituent(s) and silyloxy group optionally having substituent(s).

R¹ - R⁴ in the formula (I), the formula (II) and the formula (IV) are each independently preferably a hydrogen atom, an alkyl group optionally having substituent(s) or an aryl group optionally having substituent(s), more preferably a hydrogen atom, a C₁₋₆ alkyl group optionally having substituent(s) or a C₆₋₁₄ aryl group optionally having substituent(s), further preferably a hydrogen atom, a C₁₋₆ alkyl group or a C₆₋₁₄ aryl group, particularly preferably a hydrogen atom or a C₁₋₆ alkyl group, most preferably a hydrogen atom.

A¹ - A³ in the formula (I) and the formula (II) are each independently an acidic dissociative group, an acidic dissociative group in a salt form, or a derivative group of an acidic dissociative group.

P in the formula (II) is an aryl group having at least one selected from the group consisting of an acidic dissociative group, an acidic dissociative group in a salt form, and a derivative group of an acidic dissociative group.

Q in the formula (IV) is an arenediyl group having at least one selected from the group consisting of an acidic dissociative group, an acidic dissociative group in a salt form, and a derivative group of an acidic dissociative group.

The acidic dissociative group means an acidic functional group capable of releasing proton (H⁺) in water and is, for example, a carboxy group (-COOH), a sulfo group (-S(O)₂(OH)), a phosphono group (-P(O)(OH)₂) or a phosphonooxy group (-OP(O)(OH)₂). The acidic dissociative group is preferably a carboxy group, a sulfo group or a phosphono group.

The acidic dissociative group may be, for example, a salt form such as -COOM¹, -S(O)₂(OM²), -P(O)(OM³)(OM'¹), -OP(O)(OM⁴)(OM'²) wherein M¹ - M⁴ are each independently a cation different from a proton (hereinafter sometimes to be abbreviated as "other cation"), and M'¹ and M'² are each a hydrogen atom (proton) or other cation and the like. Examples of other cation include metal ion and ammonium ion. Examples of the metal ion include alkali metal ion. Other cation is preferably an alkali metal ion, more preferably a potassium ion or cesium ion.

The derivative group of the acidic dissociative group is a group that can form an acidic dissociative group or an acidic dissociative group in a salt form when hydrolyzed. Examples of such group include -COOR^{a1}, -S(O)₂(OR^{a2}), -P(O)(OR^{a3})(OR'^{a1}), -OP(O)(OR^{a4})(OR'^{a2}), -CON(R'^{a3})(R'^{a4}), -S(O)₂N(R'^{a5})(R'^{a6}), - P(O){N(R'^{a7})(R'^{a8})}{N(R'^{a9})(R'^{a10})}, -OP(O){N(R'^{a11})(R'^{a12})}{N(R'^{a13})(R'^{a14})} (in the aforementioned formulas, R^{a1} - R^{a4} are each independently an alkyl group optionally having substituent(s), a cycloalkyl group optionally having substituent(s), an aryl group optionally having substituent(s) or an aralkyl group optionally having substituent(s), and R'^{a1} - R'^{a14} are each independently a hydrogen atom, an alkyl group optionally having substituent(s), a cycloalkyl group optionally having substituent(s), an aryl group optionally having substituent(s) or an aralkyl group optionally having substituent(s)).

The derivative group of the acidic dissociative group is preferably -COOR^{a1}, -S(O)₂(OR^{a2}), -CON(R'^{a3})(R'^{a4}) or - S(O)₂N(R'^{a5})(R'^{a6}) wherein R^{a1} and R^{a2} are each independently an alkyl group optionally having substituent(s), a cycloalkyl group optionally having substituent(s), an aryl group optionally having substituent(s) or an aralkyl group optionally having substituent(s), and R'^{a3} - R'^{a6} are each independently a hydrogen atom, an alkyl group, a cycloalkyl group, an aryl group or an aralkyl group, more preferably -COOR^{a1} or - CON(R'^{a3})(R'^{a4}) wherein R^{a1} is an alkyl group optionally having substituent(s), a cycloalkyl group optionally having substituent(s), an aryl group optionally having substituent(s) or an aralkyl group optionally having substituent(s), and R'^{a3} and R'^{a4} are each independently a hydrogen atom, an alkyl group optionally having substituent(s), a cycloalkyl group optionally having substituent(s), an aryl group optionally having substituent(s) or an aralkyl group optionally having substituent(s).

A derivative group of the acidic dissociative group is further preferably -CON(R'^{a3})(R'^{a4}) wherein R'^{a3} and R'^{a4} are each independently a hydrogen atom, an alkyl group optionally having substituent(s), a cycloalkyl group optionally having substituent(s), an aryl group optionally having substituent(s) or an aralkyl group optionally having substituent(s). In - CON(R'^{a3})(R'^{a4}), further more preferably, R'^{a3} is a hydrogen atom and R'^{a4} is an alkyl group optionally having substituent(s); particularly preferably, R'^{a3} is a hydrogen atom and R'^{a4} is a C₁₋₆ alkyl group optionally having substituent(s); most preferably R'^{a3} is a hydrogen atom and R'^{a4} is a C₁₋₆ alkyl group optionally having a sulfo group. In the following, - CON(R'^{a3})(R'^{a4}) is sometimes to be abbreviated as "a carbamoyl group optionally having substituent(s)".

The first crosslinked polymer preferably has at least one selected from the group consisting of a carboxy group, a sulfo group, a phosphono group, a carboxy group in a salt form, a sulfo group in a salt form, a phosphono group in a salt form, a derivative group of a carboxy group, a derivative group of a sulfo group and a derivative group of a phosphono group, more preferably at least one selected from the group consisting of a carboxy group, a sulfo group, a phosphono group, a carboxy group in an alkali metal salt form, a sulfo group in an alkali metal salt form, a phosphono group in an alkali metal salt form, a C₁₋₆ alkoxy-carbonyl group optionally having substituent(s), and a carbamoyl group optionally having substituent(s), further preferably at least one selected from the group consisting of a carboxy group, a sulfo group, a phosphono group, a carboxy group in an alkali metal salt form, a sulfo group in an alkali metal salt form, a phosphono group in an alkali metal salt form, and a carbamoyl group optionally having substituent(s), particularly preferably at least one selected from the group consisting of a carboxy group, a sulfo group, a phosphono group, a carboxy group in an alkali metal salt form, a sulfo group in an alkali metal salt form, and a phosphono group in an alkali metal salt form.

A¹ in the formula (I) is preferably a carboxy group, a sulfo group, a phosphono group, a carboxy group in an alkali metal salt form, a sulfo group in an alkali metal salt form, a phosphono group in an alkali metal salt form, or a carbamoyl group optionally having substituent(s), more preferably a carboxy group, a sulfo group, a phosphono group, a carboxy group in an alkali metal salt form, a sulfo group in an alkali metal salt form, a phosphono group in an alkali metal salt form, or a C₁₋₆ monoalkyl-carbamoyl group optionally having substituent(s), further preferably a carboxy group, a phosphono group, a carboxy group in an alkali metal salt form, or a phosphono group in an alkali metal salt form.

Compound (I) is preferably at least one selected from the group consisting of acrylic acid, methacrylic acid, vinylsulfonic acid, vinylphosphonic acid, and salts and derivatives thereof. As such salt, an alkali metal salt is preferable. Examples of the derivatives thereof include alkyl acrylate, alkyl methacrylate, N-alkylacrylamide, N,N-dialkylacrylamide, N-alkylmethacrylamide, N,N-dialkylmethacrylamide, alkyl vinylsulfonate, monoalkyl vinylphosphonate and dialkyl vinylphosphonate. The alkyl group of the aforementioned derivative is preferably a C₁₋₆ alkyl group optionally having substituent(s), more preferably a C₁₋₆ alkyl group optionally having a sulfo group.

Compound (I) is more preferably at least one selected from the group consisting of acrylic acid, methacrylic acid, vinylsulfonic acid, vinylphosphonic acid, an alkali metal salt of acrylic acid, an alkali metal salt of methacrylic acid, an alkali metal salt of vinylsulfonic acid, an alkali metal salt of vinylphosphonic acid, a C₁₋₆ alkyl acrylate, a C₁₋₆ alkyl methacrylate, a N-C₁₋₆ alkylacrylamide, a N,N-di(C₁₋₆ alkyl) acrylamide, a N-C₁₋₆ alkylmethacrylamide, a N,N-di(C₁₋₆ alkyl)methacrylamide, a C₁₋₆ alkyl vinylsulfonate, a mono C₁₋₆ alkyl vinylphosphonate, and a di C₁₋₆ alkyl vinylphosphonate, further preferably at least one selected from the group consisting of acrylic acid, vinylphosphonic acid, 2-acrylamido-2-methylpropanesulfonic acid, an alkali metal salt of acrylic acid, an alkali metal salt of vinylphosphonic acid, and an alkali metal salt of 2-acrylamido-2-methylpropanesulfonic acid, particularly preferably at least one selected from the group consisting of acrylic acid and an alkali metal salt of acrylic acid. The aforementioned C₁₋₆ alkyl group optionally has a substituent (e.g., sulfo group).

P in the formula (II) is preferably a C₆₋₁₄ aryl group having at least one selected from the group consisting of a carboxy group, a sulfo group, a phosphono group, a carboxy group in an alkali metal salt form, a sulfo group in an alkali metal salt form, a phosphono group in an alkali metal salt form, and a C₁₋₆ alkoxy-carbonyl group optionally having substituent(s), more preferably a phenyl group having at least one selected from the group consisting of a carboxy group, a sulfo group, a phosphono group, a carboxy group in an alkali metal salt form, a sulfo group in an alkali metal salt form, and a phosphono group in an alkali metal salt form, further preferably a phenyl group having at least one selected from the group consisting of a sulfo group and a sulfo group in an alkali metal salt form.

Compound (II) is preferably at least one selected from the group consisting of styrene sulfonic acid, and salts and derivatives thereof. The vinyl group and the sulfo group of styrene sulfonic acid are preferably present at the para-position from each other. As the salt, an alkali metal salt is preferable. Examples of the derivative include alkyl styrene sulfonate. The alkyl group of the derivative is preferably a C₁₋₆ alkyl group optionally having substituent(s).

Compound (II) is more preferably at least one selected from the group consisting of styrene sulfonic acid, an alkali metal salt of styrene sulfonic acid, and a C₁₋₆ alkyl styrene sulfonate, further preferably at least one selected from the group consisting of styrene sulfonic acid and an alkali metal salt of styrene sulfonic acid, particularly preferably at least one selected from the group consisting of p-styrene sulfonic acid and an alkali metal salt of p-styrene sulfonic acid.

A² and A³ in the formula (III) are each independently preferably a carboxy group, a sulfo group, a phosphono group, a carboxy group in an alkali metal salt form, a sulfo group in an alkali metal salt form, a phosphono group in an alkali metal salt form, or a C₁₋₆ alkoxy-carbonyl group, more preferably a carboxy group, a sulfo group, a phosphono group, a carboxy group in an alkali metal salt form, a sulfo group in an alkali metal salt form, or a phosphono group in an alkali metal salt form, further preferably a carboxy group or a carboxy group in an alkali metal salt form.

W¹ in the formula (III) is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group.

W¹ is preferably an alkylene group optionally having substituent(s) or a cycloalkanediyl group optionally having substituent(s), more preferably an alkylene group optionally having substituent(s), further preferably a C₁₋₆ alkylene group optionally having substituent(s), most preferably a C₁₋₆ alkylene group.

Among compounds (III), a compound represented by the formula (III-1): 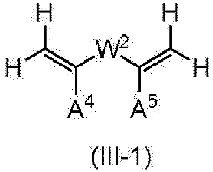 wherein
A⁴ and A⁵ are each independently a carboxy group, a carboxy group in a salt form, or a derivative group of a carboxy group, and
W² is an alkylene group optionally having substituent(s) or a cycloalkanediyl group optionally having substituent(s) is preferable. Only one kind or two or more kinds of compound (III-1) may be used.
A⁴ and A⁵ are each independently preferably a carboxy group, a carboxy group in an alkali metal salt form, or a C₁₋₆ alkoxy-carbonyl group, more preferably a carboxy group or a carboxy group in an alkali metal salt form.
W² is preferably an alkylene group optionally having substituent (s), more preferably a C₁₋₁₀ alkylene group optionally having substituent(s), further preferably a C₁₋₁₀ alkylene group, particularly preferably a C₁₋₆ alkylene group.

Compound (III-1) is preferably a compound in which A⁴ and A⁵ are each independently a carboxy group, a carboxy group in an alkali metal salt form, or a C₁₋₆ alkoxy-carbonyl group, and W² is a C₁₋₁₀ alkylene group optionally having substituent(s) (hereinafter to be abbreviated as "compound (III-1a)").

Compound (III-1a) is more preferably a compound in which A⁴ and A⁵ are each independently a carboxy group or a carboxy group in an alkali metal salt form, and W² is a C₁₋₁₀ alkylene group (hereinafter to be abbreviated as "compound (III-1b)").

Compound (III-1b) is further preferably a compound in which A⁴ and A⁵ are each independently a carboxy group or a carboxy group in an alkali metal salt form, and W² is a C₁₋₆ alkylene group (hereinafter to be abbreviated as "compound (III-1c)") .

Q in the formula (IV) is preferably an arenediyl group having at least one selected from the group consisting of a carboxy group, a sulfo group, a phosphono group, a carboxy group in an alkali metal salt form, a sulfo group in an alkali metal salt form, a phosphono group in an alkali metal salt form, and a C₁₋₆ alkoxy-carbonyl group, more preferably a benzenediyl group having at least one selected from the group consisting of a carboxy group, a sulfo group, a phosphono group, a carboxy group in an alkali metal salt form, a sulfo group in an alkali metal salt form, and a phosphono group in an alkali metal salt form, further preferably a benzenediyl group having at least one selected from the group consisting of a sulfo group and a sulfo group in an alkali metal salt form.

Compound (IV) is preferably sat least one selected from the group consisting of divinylbenzene sulfonic acid, and salts and derivatives thereof. As the salt, an alkali metal salt is preferable. Examples of the derivative include alkyl divinylbenzene sulfonate. The alkyl group of the derivative is preferably a C₁₋₆ alkyl group.

Compound (IV) is more preferably at least one selected from the group consisting of divinylbenzene sulfonic acid, an alkali metal salt of divinylbenzene sulfonic acid, and a C₁₋₆ alkyl divinylbenzene sulfonate, further preferably at least one selected from the group consisting of divinylbenzene sulfonic acid and an alkali metal salt of divinylbenzene sulfonic acid.

Specific examples of the noncrosslinkable compound include, but are not limited to, the following compounds.

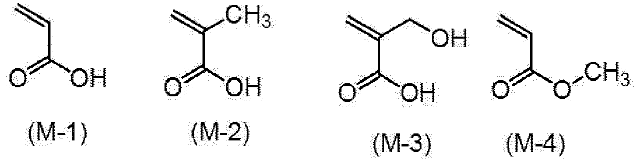

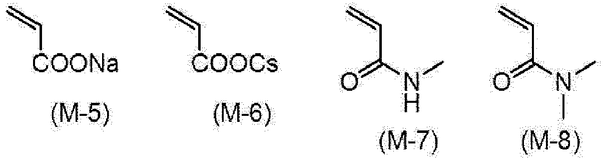

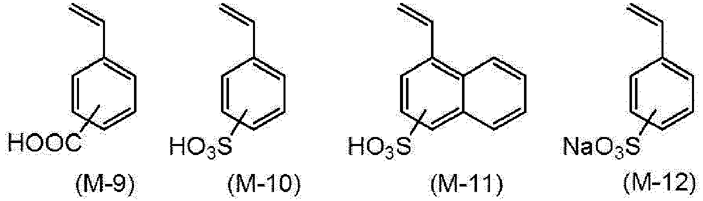

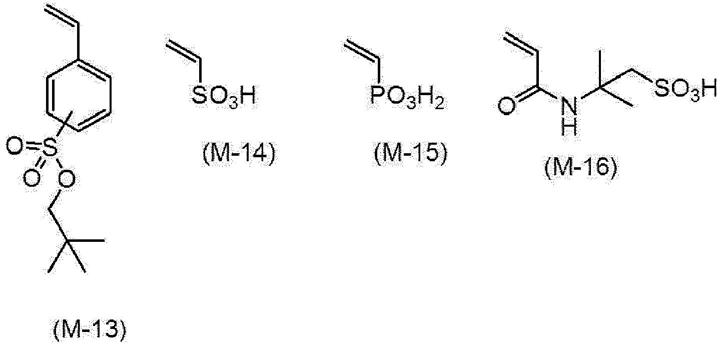

The noncrosslinkable compound is preferably at least one selected from the group consisting of acrylic acid, methacrylic acid, vinylsulfonic acid, vinylphosphonic acid, styrene sulfonic acid, and salts and derivatives thereof, more preferably at least one selected from the group consisting of acrylic acid, methacrylic acid, vinylsulfonic acid, vinylphosphonic acid, p-styrene sulfonic acid, and salts and derivatives thereof, further preferably at least one selected from the group consisting of acrylic acid, vinylphosphonic acid, p-styrene sulfonic acid, and salts and derivatives thereof, particularly preferably at least one selected from the group consisting of acrylic acid, vinylphosphonic acid, p-styrene sulfonic acid, 2-acrylamido-2-methylpropanesulfonic acid, an alkali metal salt of acrylic acid, an alkali metal salt of vinylphosphonic acid, an alkali metal salt of p-styrene sulfonic acid, and an alkali metal salt of 2-acrylamido-2-methylpropanesulfonic acid, most preferably at least one selected from the group consisting of acrylic acid and an alkali metal salt of acrylic acid.

Specific examples of the crosslinkable compound include, but are not limited to, the following compounds.

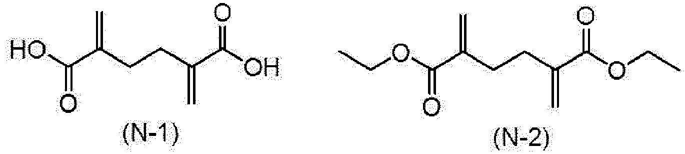

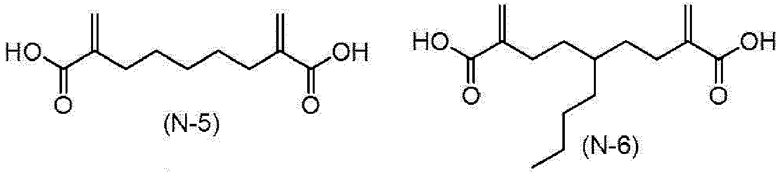

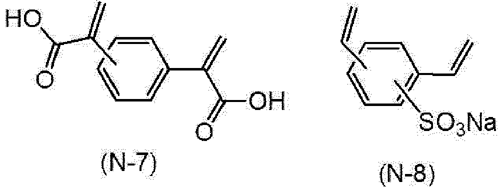

The crosslinkable compound is preferably compound (III-1), more preferably compound (III-1a), further preferably compound (III-1b), particularly preferably compound (III-1c). Only one kind or two or more kinds of each of these compounds may be used.

A combination of the noncrosslinkable compound being at least one selected from the group consisting of acrylic acid, and a salt and a derivative thereof, and the crosslinkable compound being compound (III-1) is preferable.

A combination of the noncrosslinkable compound being at least one selected from the group consisting of acrylic acid and an alkali metal salt of acrylic acid, and the crosslinkable compound being compound (III-1a) is more preferable. In the aforementioned combinations, compound (III-1a) is further preferably compound (III-1b), particularly preferably compound (III-1c).

From the aspect of the gas selectivity of the obtained gel, the amount of the crosslinkable compound is preferably 0.01 to 20 mol%, more preferably 0.01 to 15 mol%, further preferably 0.05 to 15 mol%, particularly preferably 0.1 to 15 mol%, most preferably 0.1 to 10 mol%, relative to the total of the crosslinkable compound and the noncrosslinkable compound.

From the aspect of gas selectivity of the obtained gel, the amount of the first crosslinked polymer is preferably 10 to 200 parts by weight, more preferably 10 to 180 parts by weight, further preferably 10 to 150 parts by weight, per 100 parts by weight of the second crosslinked polymer.

### (Second network structure)

The second network structure in the gel of the present invention is composed of a second crosslinked polymer having at least one selected from the group consisting of an acidic dissociative group, an acidic dissociative group in a salt form, and a derivative group of an acidic dissociative group. Only one kind or two or more kinds of the second crosslinked polymer may be used.

The second crosslinked polymer is preferably a hydrophilic crosslinked polymer having at least one selected from the group consisting of an acidic dissociative group, an acidic dissociative group in a salt form, and a derivative group of an acidic dissociative group to form an interpenetrating network with the first crosslinked polymer. The hydrophilic crosslinked polymer is acrylic acid-based crosslinked polymer. A hydrophilic crosslinked polymer having a high degree of crosslinking and a high water absorbing power is generally known as Superabsorbent Polymer (hereinafter sometimes to be abbreviated as "SAP").

The second crosslinked polymer is an acrylic acid-based crosslinked polymer having at least one selected from the group consisting of a carboxy group, a carboxy group in a salt form, and a derivative group of a carboxy group (hereinafter sometimes to be abbreviated as "carboxy group and the like"). The carboxy group and the like are each preferably at least one selected from the group consisting of a carboxy group, a carboxy group in an alkali metal salt form and a C₁₋₆ alkoxy-carbonyl group optionally having substituent(s), more preferably at least one selected from the group consisting of a carboxy group and a carboxy group in an alkali metal salt form.

An acrylic acid-based crosslinked polymer having a carboxy group and the like can be produced by, for example, polymerizing acrylic acid, acrylate and a crosslinkable monomer. Such polymerization is well known in the field of SAP and those of ordinary skill in the art can produce an acrylic acid-based crosslinked polymer having a carboxy group and the like by appropriately setting the conditions therefor.

In the present invention, the crosslinkable monomer for producing an acrylic acid-based crosslinked polymer having a carboxy group and the like is not particularly limited and, for example, one well known in the field of SAP can be used. Examples of the crosslinkable monomer include 1,3-butylene glycol di(meth)acrylate, 1,4-butanediol di(meth)acrylate, 1,6-hexanediol di(meth)acrylate, neopentylglycol di(meth)acrylate, ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, tripropylene glycol di(meth)acrylate, trimethylolpropane tri(meth)acrylate, pentaerythritol tetra(meth)acrylate, dipentaerythritol penta(meth)acrylate and divinylbenzene.

An acrylic acid-based crosslinked polymer having a carboxy group and the like optionally further has at least one selected from the group consisting of an acidic dissociative group, an acidic dissociative group in a salt form, and a derivative group of an acidic dissociative group, which is different from the carboxy group and the like (hereinafter sometimes to be abbreviated as "other acidic dissociative group and the like"). Examples of such other acidic dissociative group and the like include sulfo group, phosphono group, phosphonooxy group, sulfo group in salt form, phosphono group in salt form, phosphonooxy group in salt form, derivative group of sulfo group, derivative group of phosphono group and derivative group of phosphonooxy group. The other acidic dissociative group and the like can be introduced into a crosslinked polymer by polymerizing a monomer having the group together with the aforementioned acrylic acid, acrylate and crosslinkable monomer, or adding a monomer or polymer having other acidic dissociative group and the like to the crosslinked polymer obtained by polymerization.

An acrylic acid-based crosslinked polymer having a carboxy group and the like may contain, in addition to the constitutional units derived from acrylic acid or constitutional units derived from acrylate, constitutional units derived from at least one kind selected from the group consisting of methacrylic acid, maleic acid, fumaric acid, crotonic acid and salts thereof and vinyl alcohol (hereinafter sometimes to be abbreviated as "other constitutional units"). As used herein, the "constitutional unit derived from vinyl alcohol" means a unit having a structure formed by binding of a double bond of vinyl alcohol, and may not be formed from the vinyl alcohol itself. The "constitutional unit derived from vinyl alcohol" can be generally formed by polymerizing vinyl acetate and hydrolyzing a constitutional unit derived from vinyl acetate. In addition, the "constitutional unit derived from acrylic acid" and the like also mean the same. When an acrylic acid-based crosslinked polymer having a carboxy group and the like contains other constitutional units, the crosslinked polymer may be any of a random copolymer, an alternating copolymer, a block copolymer and a graft copolymer.

The second crosslinked polymer is further preferably a crosslinked polyacrylic acid having at least one selected from the group consisting of a carboxy group and a carboxy group in a salt form. The crosslinked polyacrylic acid here means a crosslinked polymer composed of constitutional units derived from acrylic acid, constitutional units derived from acrylate and constitutional units derived from a crosslinkable monomer. The second crosslinked polymer is particularly preferably crosslinked polyacrylic acid having at least one selected from the group consisting of a carboxy group and a carboxy group in an alkali metal salt form.

As an index of the degree of crosslinking of a crosslinked polymer, the viscosity of a 0.2 wt% aqueous solution thereof can be mentioned. From the aspects of the pressure capacity, water-holding capacity and the like of the second crosslinked polymer that forms an interpenetrating network with the first crosslinked polymer, the viscosity of a 0.2 wt% aqueous solution of the second crosslinked polymer is preferably 500 to 50,000 mPa.s, more preferably 800 to 45,000 mPa.s, further preferably 1,000 to 40,000 mPa•s. The viscosity value is measured by a B-type viscometer under the conditions of pH 7, temperature 25°C and rotating speed 20 rpm.

As the second crosslinked polymer, a commercially available product can be used. Examples of the commercially available product include "SANFRESH (registered trade mark)" manufactured by Sanyo Chemical Industries, Ltd., "AQUPEC (registered trade mark)" manufactured by Sumitomo Seika Chemicals Co., Ltd., and the like.

### (Other component)

The gel of the present invention further contains a basic compound. The basic compound used in the present invention may be any as long as it reversibly reacts with a substance that is separated by permeation through the gel of the present invention (hereinafter sometimes to be referred to as abbreviated as "permeating substance"), and promotes selective permeation of the permeating substance. It is appropriately selected according to the permeating substance.

The permeating substance is an acidic gas. At least one selected from the group consisting of carbon dioxide, hydrogen sulfide, carbonyl sulfide, sulfur oxide (SOₓ), and nitrogen oxide (NOₓ) is preferable, at least one selected from the group consisting of carbon dioxide and hydrogen sulfide is more preferable, carbon dioxide or hydrogen sulfide is particularly preferable, and carbon dioxide is most preferable.

Only one kind or two or more kinds of the basic compound may be used. The basic compound is preferably at least one selected from the group consisting of carbonate, hydrogen carbonate and hydroxide of an alkali metal, and amines, more preferably at least one selected from the group consisting of carbonate, hydrogen carbonate and hydroxide of an alkali metal, further preferably at least one selected from the group consisting of carbonate, hydrogen carbonate and hydroxide of at least one alkali metal selected from the group consisting of Li, Na, K, Rb, and Cs.

Examples of the alkali metal carbonate include lithium carbonate, sodium carbonate, potassium carbonate, rubidium carbonate, and cesium carbonate and the like. Examples of the alkali metal hydrogen carbonate include sodium hydrogen carbonate, potassium hydrogen carbonate, rubidium hydrogen carbonate, and cesium hydrogen carbonate and the like. Examples of the alkali metal hydroxide include lithium hydroxide, sodium hydroxide, potassium hydroxide, rubidium hydroxide, and cesium hydroxide and the like.

Examples of the amines include alkanolamines (e.g., monoethanolamine), amines having one primary amino group such as 3-amino-1-propanol and the like, amines having one secondary amino group such as diethanolamine, 2-methylaminoisopropanol and the like, amines having one tertiary amino group such as triethanolamine and the like, amines having two primary amino groups such as ethylenediamine and the like, amines having two secondary amino groups such as N,N'-bis(2-hydroxyethyl)ethylenediamine and the like, amines having one cyclic amino group such as pyrrolidine, piperidine, morpholine, N-methylmorpholine, thiomorpholine, hexamethylenimine and the like, amines having two cyclic amino groups such as piperazine, 2-methylpiperazine, 1-methylpiperazine, 1,4-dimethylpiperazine and the like, and amines having plural amino groups such as diethylenetriamine, tetraethylenepentamine and the like. An amine having a boiling point of not less than 50°C is preferable, and an amine having a boiling point of not less than 80°C is more preferable.

The basic compound is most preferably at least one selected from the group consisting of cesium carbonate and cesium hydroxide.

To promote selective permeation of a permeating substance, the acidic dissociative group in the gel is preferably neutralized with a basic compound.

The amount of the basic compound contained in the gel is preferably 0.1 to 5 mol, more preferably 0.1 to 4.5 mol, further preferably 0.1 to 4 mol, particularly preferably 0.2 to 4 mol, most preferably 0.2 to 3.5 mol, per 1 mol of the total of the acidic dissociative group, the acidic dissociative group in a salt form, and the derivative group of an acidic dissociative group, each possessed by the first crosslinked polymer and the second crosslinked polymer. When, for example, none of the first crosslinked polymer and the second crosslinked polymer has a derivative group of an acidic dissociative group, the "total of the acidic dissociative group, the acidic dissociative group in a salt form, and the derivative group of an acidic dissociative group, each possessed by the first crosslinked polymer and the second crosslinked polymer" means the "total of the acidic dissociative group and the acidic dissociative group in a salt form, each possessed by the first crosslinked polymer and the second crosslinked polymer".

The amount of the basic compound contained in the gel is preferably 1 to 5 mol, more preferably 1 to 4.5 mol, further preferably 1 to 4 mol, particularly preferably 1 to 3.5 mol, per 1 mol of the total of the acidic dissociative group and the derivative group of an acidic dissociative group, each possessed by the first crosslinked polymer and the second crosslinked polymer.

The gel of the present invention may contain added auxiliary ingredients such as catalyst for promoting permeation and the like. The catalyst for promoting permeation is a catalyst that increases the reaction rate of CO₂ hydration reaction shown in the following formula (1) when, for example, the permeating substance is CO₂ as an acidic gas. The symbol "⇔" in the reaction formula in the present specification shows that it is a reversible reaction.

CO₂ + H₂O ⇔ HCO₃⁻ + H⁺ (1)

The reaction between CO₂ and a basic compound is shown by the following formula (2) as an overall reaction formula. In the formula (2), the basic compound is assumed to be carbonate. The above-mentioned CO₂ hydration reaction which is one of the elementary reactions for the reaction is a slow reaction under non-catalytic conditions. Thus, addition of a catalyst is expected to promote the elementary reaction, which then promotes the reaction between CO₂ and the basic compound, thus resulting in improved permeation rate of CO₂.

CO₂ + H₂O + CO₃²⁻ ⇔ 2HCO₃⁻ (2)

As described above, when the gel of the present invention contains a catalyst for the reaction between the basic compound and CO₂, the reaction between CO₂ and the basic compound is promoted and the CO₂ permeability and CO₂ selectivity are drastically improved.

Examples of the added auxiliary ingredient include oxo acid compound and multidentate ligand that forms a complex with alkali metal ion. The oxo acid compound preferably contains an oxo acid compound of at least one element selected from the group consisting of a group 14 element, a group 15 element and a group 16 element. The oxo acid compound more preferably contains at least one selected from the group consisting of a tellurous acid compound, a selenous acid compound, an arsenous acid compound and an orthosilicic acid compound. More specifically, potassium tellurite (K₂TeO₃), sodium tellurite (Na₂TeO₃), lithium tellurite (Li₂O₃Te), potassium selenite (K₂O₃Se), sodium arsenite (NaO₂As), sodium orthosilicate (Na₄O₄Si) and the like are preferably used. Among these, a tellurous acid compound is more preferable, potassium tellurite and sodium tellurite are more preferable.

Examples of the multidentate ligand that forms a complex with alkali metal ion include cyclic polyethers such as 12-crown-4, 15-crown-5, 18-crown-6, benzo-12-crown-4, benzo-15-crown-5, benzo-18-crown-6, dibenzo-12-crown-4, dibenzo-15-crown-5, dibenzo-18-crown-6, dicyclohexyl-12-crown-4, dicyclohexyl-15-crown-5, dicyclohexyl-18-crown-6, n-octyl-12-crown-4, n-octyl-15-crown-5, n-octyl-18-crown-6 and the like; cyclic polyetheramines such as cryptand[2.1], cryptand[2.2] and the like; bicyclic polyetheramines such as cryptand[2.1.1], cryptand[2.2.2] and the like; porphyrin, phthalocyanine, polyethylene glycol, ethylenediaminetetraacetic acid and the like.

Besides the basic compound and added auxiliary ingredients such as catalyst for promoting permeation and the like, the gel of the present invention optionally contains various additives. Examples of the additive include surfactant, antioxidant, filler and the like. Only one kind or two or more kinds of the additive may be used.

The surfactant is not particularly limited and conventionally-known ones can be used. Examples of the surfactant include polyoxyethylene polyoxypropylene glycols, polyoxyethylene alkylphenyl ethers, polyoxyethylene alkyl ethers, fluorochemical surfactant, silicone-based surfactant and the like.

The gel of the present invention may also contain water. When the gel of the present invention contains water, the water content of the gel (i.e., amount of water relative to the whole gel) is preferably 1 to 99.9 wt%, more preferably 3 to 99.9 wt%, further preferably 3 to 99 wt%, particularly preferably 5 to 98 wt%.

### (Separation membrane)

The separation membrane of the present invention contains the aforementioned gel. The gel in the acidic gas separation membrane preferably has a membrane shape (hereinafter sometimes to be abbreviated as "gel membrane"). That is, the separation membrane of the present invention preferably contains a gel membrane.

The separation membrane of the present invention is preferably a gas separation membrane, more preferably an acidic gas separation membrane. The acidic gas is preferably at least one selected from the group consisting of carbon dioxide, hydrogen sulfide, carbonyl sulfide, sulfur oxide (SOₓ) and nitrogen oxide (NOₓ), more preferably at least one selected from the group consisting of carbon dioxide and hydrogen sulfide, further preferably carbon dioxide or hydrogen sulfide, particularly preferably carbon dioxide. The separation membrane of the present invention may be used for, for example, a gas separation and recovery apparatus as a membrane-absorption hybrid method used in combination with the absorbing solution and the like described in JP-A-2007-297605.

The thickness of the gel membrane in the separation membrane of the present invention is appropriately selected in view of the necessary permeability and selectivity of the substance separated from other substance. It is preferably 0.1 to 600 µm, more preferably 0.5 to 400 µm, further preferably 1 to 200 µm.

The gel (particularly gel membrane) in the separation membrane preferably contains water to permeate a substance to be separated through the gel to selectively separate same from other substances. The water content of the gel (i.e., amount of water relative to the whole gel) is preferably 5 to 80 wt%, more preferably 5 to 70 wt%, further preferably 8 to 70 wt%, particularly preferably 10 to 60 wt%.

The separation membrane of the present invention may further contain a porous membrane. The porous membrane may be a single layer membrane or a laminate membrane. The separation membrane of the present invention more preferably has a structure in which a gel membrane is placed in between two sheets of porous membrane. The two sheets of porous membrane may be the same or different.

The porous membrane is preferably a porous membrane showing high permeability of a substance to be separated. Examples of the membrane showing high permeability of a substance to be separated include a hydrophobic porous membrane.

When the gel of the present invention is laminated on the surface of a hydrophobic porous membrane, a surfactant may be applied on the surface of the hydrophobic porous membrane before lamination.

When the separation membrane of the present invention is used for gas separation, the heat resistance of the porous membrane is preferably not less than 100°C. The "heat resistance of not less than 100°C" means that the form before preservation is maintained and curl due to heat shrinkage or thermal melting that can be confirmed by visual observation does not occur even after preservation of the porous membrane at not less than 100°C for 2 hr.

Examples of the porous membrane material include resin materials such as polyolefin-based resin (e.g., polyethylene, polypropylene), fluorine-containing resin (e.g., polytetrafluoroethylene (PTFE), polyvinyl fluoride, polyvinylidene fluoride), polyphenylenesulfide, polyethersulfone, polyimide, high-molecular weight polyester, heat-resistant polyamide, aramid, polycarbonate and the like; inorganic materials such as metal, glass, ceramics and the like, and the like. Among these, fluorine-containing resin, polyphenylenesulfide, polyethersulfone, polyimide and ceramic are preferable and PTFE, polyvinyl fluoride and polyvinylidene fluoride are more preferable in terms of water repellency and heat resistance. PTFE is more preferable since fine pore size is easy to achieve, energy efficiency of separation is good due to high porosity and the like.

While the thickness of the porous membrane is not particularly limited, the thickness thereof is preferably 10 to 3, 000 µm, more preferably 10 to 500 µm, further preferably 15 to 150 µm, from the aspect of mechanical strength.

While the pore size of the porous membrane is not particularly limited, it is preferably 0.005 to 10 µm, more preferably 0.005 to 1 µm. While the porosity of the porous membrane is not particularly limited, it is preferably not less than 50% by volume, more preferably not less than 55% by volume.

The adhesive strength between the gel membrane and the porous membrane can be adjusted by surface treatments such as a corona treatment, a plasma treatment and the like of the porous membrane, and selecting a preferable pore size of the porous membrane. For example, the adhesive strength tends to increase when the intensity of a corona treatment of the porous membrane surface is increased.

### (Separation apparatus)

The separation apparatus of the present invention includes the aforementioned separation membrane. The separation apparatus of the present invention preferably includes a separation membrane module containing the aforementioned separation membrane. Examples of the type of the module include spiral type, hollow fiber type, pleat type, tube type, plate & frame type and the like. The separation apparatus of the present invention is preferably a gas separation apparatus, more preferably an acidic gas separation apparatus.

### (Production method of gel)

The gel of the present invention (i.e., gel having an interpenetrating network formed from a first network structure composed of a first crosslinked polymer and a second network structure composed of a second crosslinked polymer having at least one selected from the group consisting of an acidic dissociative group, an acidic dissociative group in a salt form and a derivative group of an acidic dissociative group) can be produced by a method including a step of forming the first crosslinked polymer by polymerizing at least one noncrosslinkable compound selected from the group consisting of compound (I) and compound (II), and at least one crosslinkable compound selected from the group consisting of compound (III) and compound (IV) in a mixture containing water and the second crosslinked polymer.

The amount of water in the mixture is preferably 5 to 1,000 parts by weight, more preferably 10 to 200 parts by weight, further preferably 10 to 100 parts by weight, per 1 part by weight of the second crosslinked polymer.

The form of polymerization is not particularly limited and may be any of heat polymerization and photo polymerization according to the kind of the noncrosslinkable compound, crosslinkable compound, polymerization initiator and the like to be used.

When a heat polymerization is performed, the temperature depends on the kind of the polymerization initiator and the like to be used and it is, for example, 40 to 150°C.

When photo polymerization is performed, a given active energy ray only needs to be irradiated according to the kind of the polymerization initiator and the like to be used. The active energy ray is not particularly limited as long as it can impart energy capable of generating polymerization initiating species. For example, α-ray, γ-ray, X-ray, ultraviolet ray (UV), visible light, electron ray and the like can be mentioned. Among these, ultraviolet ray (UV) is preferable. The peak wavelength of UV is preferably 200 to 800 nm, more preferably 200 to 600 nm. The irradiation of UV is preferably 100 to 20,000 mJ/cm², more preferably 200 to 10,000 mJ/cm².

The polymerization is preferably photo polymerization, more preferably photo-radical polymerization.

A polymerization initiator may be used for polymerization. The polymerization initiator is not particularly limited and known polymerization initiators can be used. Examples of the heat polymerization initiator include ketone peroxides such as methyl ethyl ketone peroxide and the like, hydroperoxides such as cumene hydroperoxide and the like, diacyl peroxides such as benzoyl peroxide and the like, dialkyl peroxides such as dicumyl peroxide and the like, peroxyketals such as 1,1-di-t-butylperoxycyclohexane and the like, alkyl peresters such as t-butyl peroxybenzoate and the like, peroxycarbonates such as t-butylperoxyisopropyl carbonate and the like, azo polymerization initiators such as 2,2-azobisisobutyronitrile, 4,4'-azobis-4-cyanovaleric acid and the like.

Examples of the photo polymerization initiator include benzoin ether, 2,2-dimethoxy-1,2-diphenylethan-1-one, 1-hydroxycyclohexyl phenyl ketone, 2-hydroxy-2-methyl-1-phenylpropan-1-one, 1-[4-(2-hydroxyethoxy)-phenyl]-2-hydroxy-2-methyl-1-propan-1-one, 2-hydroxy-1-[4-[4-(2-hydroxy-2-methylpropionyl)benzyl]phenyl]-2-methylpropan-1-one, 2-methyl-1-(4-methylthiophenyl)-2-morpholinopropan-1-one, 2-benzyl-2-dimethylamino-1-(4-morpholinophenyl)-1-butanone, 2-(dimethylamino)-2-[(4-methylphenyl)methyl]-1-[4-(4-monpholinyl)phenyl]-1-butanone, diphenyl(2,4,6-trimethylbenzoyl)phosphine oxide, bis(2,4,6-trimethylbenzoyl)phenylphosphine oxide, bis(η5-2,4-cyclopentadien-1-yl)-bis(2,6-difluoro-3-(1H-pyrrol-1-yl)-phenyl)titanium, 1-[4-(phenylthio)phenyl]-1,2-octanedione 2-(O-benzoyloxime), 1-[6-(2-methylbenzoyl)-9-ethyl-9H-carbazol-3-yl]ethanone O-acetyloxime and the like. Only one of these may be used singly or two or more kinds thereof may be used in combination.

The polymerization may be performed under basic conditions. The basic condition in the present invention refers to a condition that renders pH greater than 7 in the presence of water. The basic condition is preferably not less than pH 8, more preferably not less than pH 9, further preferably not less than pH 9 and not more than pH 14.

The mixture containing water, the noncrosslinkable compound, the crosslinkable compound and the second crosslinked polymer further contains a basic compound. Polymerization in a mixture containing such basic compound can form a gel containing the basic compound. This method can increase the amount of the basic compound to be contained in the gel compared to a method including addition of a basic compound after forming the gel.

The amounts of compound (I), compound (II), compound (III), compound (IV), the second crosslinked polymer and the basic compound in the mixture can be appropriately set to achieve the aforementioned amounts in the gel.

The mixture containing water, the noncrosslinkable compound, the crosslinkable compound and the second crosslinked polymer may further contain an organic solvent. Only one kind or two or more kinds of the organic solvent may be used. Examples of the organic solvent include protic polar organic solvents such as methanol, ethanol, 1-propanol, 2-propanol and the like; aprotic polar organic solvents such as acetone, methyl ethyl ketone, methyl isobutyl ketone, N-methylpyrrolidone, N,N-dimethylacetamide, N,N-dimethylformamide, tetrahydrofuran (THF), dioxane and the like. Among these, a protic polar organic solvent is preferable, and methanol, ethanol, 1-propanol and 2-propanol are more preferable.

The water and organic solvent to be used as necessary may be removed. Water and the like may be removed before, during or after the polymerization as long as it does not impair the formation of the interpenetrating network. It is preferable to remove water and the like before the polymerization. The removal can be performed by a conventionally known method, for example, heating a mixture containing water and the like, or blowing heated air against a mixture containing water and the like. The temperature at this time may be appropriately determined according to the kind of the noncrosslinkable compound, crosslinkable compound, polymerization initiator and the like to be used.

### (Production method of separation membrane)

The separation membrane of the present invention (i.e., separation membrane containing gel having an interpenetrating network formed from a first network structure composed of a first crosslinked polymer and a second network structure composed of a second crosslinked polymer having at least one selected from the group consisting of an acidic dissociative group, an acidic dissociative group in a salt form, and a derivative group of an acidic dissociative group) can be produced by a method including the following steps:
a step of forming a coated film by applying a mixture containing water, at least one noncrosslinkable compound selected from the group consisting of compound (I) and compound (II), and at least one crosslinkable compound selected from the group consisting of compound (III) and compound (IV), and the second crosslinked polymer to a substrate, and
a step of forming the first crosslinked polymer by polymerizing the noncrosslinkable compound and the crosslinkable compound.

The amount of water in the mixture to be applied to the substrate is preferably 5 to 1,000 parts by weight, more preferably 10 to 200 parts by weight, further preferably 10 to 100 parts by weight, per 1 part by weight of the second crosslinked polymer.

The substrate is preferably a porous membrane. The description of this porous membrane is as provided above. The description of polymerization in the production method of the separation membrane is the same as the description of the polymerization in the production method of the gel. The polymerization in the production method of the separation membrane is preferably photo polymerization, more preferably photo-radical polymerization. The mixture in the production method of a separation membrane may further contain a basic compound. The explanation of the basic compound is as described above.

The method for applying the mixture to a substrate is not particularly limited, and examples thereof include spin coating, bar coating, die coating, blade coating, air knife coating, gravure coating, roll coating, spray coating, dip coating, comma roll method, kiss coating, screen printing, inkjet printing and the like. The solid content of the mixture to be applied per unit area is preferably 1 to 1,000 g/m², more preferably 5 to 750 g/m², further preferably 10 to 500 g/m². The amount can be controlled by the concentration of the mixture, discharge rate of the mixture and the like. The temperature of the mixture on application to the substrate is, for example, 10 to 90°C, preferably 10 to 80°C.

When the mixture is applied to a hydrophobic substrate, the mixture may contain a surfactant. The surfactant is not particularly limited, and a conventionally-known surfactant can be used. Examples of the surfactant include polyoxyethylene polyoxypropylene glycols, polyoxyethylene alkylphenyl ethers, polyoxyethylene alkyl ethers, fluorochemical surfactant, silicone-based surfactant and the like. One kind or two or more kinds of the surfactant may be used. When a mixture not containing a surfactant is applied to a hydrophobic substrate, a surfactant may be applied in advance to a surface of the substrate.

The mixture may be applied to a substrate to form a coated film and a substrate may be further overlaid on the coated film. The two sheets of substrate sandwiching the coated film may be the same or different. The substrate is preferably a porous membrane. The explanation of the porous membrane is as mentioned above.

Similar to the production method of gel, water and organic solvent to be used as necessary may be removed also in the production method of a separation membrane. Water and the like may be removed before, during or after the polymerization as long as it does not impair the formation of the interpenetrating network. It is preferable to remove water and the like before the polymerization. For example, the mixture is applied to a substrate to form a coated film, a substrate is further placed on the coated film, the obtained laminate (precursor of separation membrane) is removed by drying, after which polymerization by heating or lighting can be performed. The temperature during removal of water and the like may be appropriately determined according to the kind of the noncrosslinkable compound, crosslinkable compound, polymerization initiator and the like to be used.

### (Gas separation method)

The present invention provides a method for separating at least one gas by contacting a mixed gas containing at least two gasses to the aforementioned separation membrane.

The mixed gas contains at least one acidic gas and at least one nonacidic gas. The acidic gas is preferably at least one selected from the group consisting of carbon dioxide, hydrogen sulfide, carbonyl sulfide, sulfur oxide (SOₓ), and nitrogen oxide (NOₓ), more preferably at least one selected from the group consisting of carbon dioxide and hydrogen sulfide, further preferably carbon dioxide or hydrogen sulfide, particularly preferably carbon dioxide. The nonacidic gas is preferably at least one selected from the group consisting of hydrogen, methane, nitrogen and carbon monoxide. The combination is further preferably a combination of carbon dioxide or hydrogen sulfide as acidic gas and at least one selected from the group consisting of hydrogen, methane, nitrogen, and carbon monoxide as nonacidic gas, particularly preferably a combination of carbon dioxide as acidic gas and at least one selected from the group consisting of hydrogen, methane and nitrogen as nonacidic gas.

The mixed gas preferably contains water. The relative humidity of the mixed gas is preferably 30 to 100%RH, more preferably 50 to 100%RH, further preferably 70 to 100%RH. When the mixed gas is in a dry state, the gel in the separation membrane preferably contains water.

The mixed gas preferably contains 1 ppm - 60%, more preferably 1 ppm - 50%, of an acidic gas. The aforementioned ppm and% are both based on the volume. The gas separation method of the present invention can selectively separate an acidic gas even from a mixed gas containing the acidic gas at a low concentration.

While the temperature of the mixed gas to be separated is not particularly limited, it is preferably 10 to 140°C.

An acidic gas is selectively separated from a mixed gas containing the acidic gas and a nonacidic gas by the method of the present invention, and the acidic gas may be further separated and/or removed by a combined use of an existing acidic gas separation process such as chemical absorption method and the like. In addition, the load of the existing process can be reduced by using the method of the present invention in combination with the existing acidic gas separation process.

The field of application of the gas separation method of the present invention is not particularly limited. For example, pre-treatment applications and replacement applications for separation of acidic gas from bio gas containing acidic gas; coal gasification power generation; amine absorption method, dry desulfurization method, wet desulfurization method, microbial desulfurization method in various oil purification, natural gas and chemical plants; and the like are assumed.

### [Examples]

The present invention is explained in more detail in the following by referring to Examples, which are not to be construed as limitative.

### (Example 1)

In a 150 mL high-density polyethylene (HDPE) container were charged water (28.8 g), crosslinked polyacrylic acid ("AQUPEC HV-501" manufactured by Sumitomo Seika Chemicals Co., Ltd., hereinafter sometimes to be abbreviated as "crosslinked PAA") (0.8 g) as the second crosslinked polymer, acrylic acid (purchased from Aldrich, hereinafter sometimes to be abbreviated as "AA") (0.16 g) as a noncrosslinkable compound, and a 50 wt% aqueous cesium hydroxide solution (manufactured by Rockwood Lithium) (10.0 g) as a basic compound, and the mixture was stirred until a uniform viscous solution was obtained. The viscosity of a 0.2 wt% aqueous solution of crosslinked PAA, which was measured using a B-type viscometer under the conditions of pH 7, temperature 25°C, rotating speed 20 rpm, was 4300 mPa•s.

After the completion of stirring, to the obtained viscous solution were added and mixed 1,5-hexadiene-2,5-dicarboxylic acid (manufactured by FCH, hereinafter sometimes to be abbreviated as "HDDCA") (0.018 g) as a crosslinkable compound, 1-[4-(2-hydroxyethoxy)-phenyl]-2-hydroxy-2-methyl-1-propan-1-one (purchased from Aldrich) (0.018 g) as a polymerization initiator, and a surfactant ("Surflon S-242" manufactured by AGC Seimi Chemical Co., Ltd.) (0.02 g) to give coating liquid I.

The obtained coating liquid I was applied on a hydrophobic polytetrafluoroethylene (PTFE) porous membrane ("Poreflon HP-010-50" manufactured by Sumitomo Electric Fine Polymer, Inc., membrane thickness 50 µm, pore size 0.1 µm) to form a coated film, and a hydrophobic PTFE porous membrane was placed on the obtained coated film. Using a dryer, the coated film was dried in an air atmosphere at about 50°C for 30 min and UV was irradiated thereon (irradiation 3500 mJ/cm²) to prepare gas separation membrane I (gel membrane thickness 20 µm) having a gel membrane with an interpenetrating network in between two sheets of hydrophobic PTFE porous membrane.

### (Example 2)

In a 150 mL high-density polyethylene (HDPE) container were charged water (21.3 g), crosslinked polyacrylic acid ("AQUPEC HV-501" manufactured by Sumitomo Seika Chemicals Co., Ltd.) (0.8 g) as the second crosslinked polymer, acrylic acid (purchased from Aldrich) (0.8 g) as a noncrosslinkable compound, and a 50 wt% aqueous cesium hydroxide solution (manufactured by Rockwood Lithium) (16.6 g) as a basic compound, and the mixture was stirred until a uniform viscous solution was obtained.

After the completion of stirring, to the obtained viscous solution were added and mixed 1,5-hexadiene-2,5-dicarboxylic acid (manufactured by FCH) (0.09 g) as a crosslinkable compound, 1-[4-(2-hydroxyethoxy)-phenyl]-2-hydroxy-2-methyl-1-propan-1-one (purchased from Aldrich) (0.09 g) as a polymerization initiator, and a surfactant ("Surflon S-242" manufactured by AGC Seimi Chemical Co., Ltd.) (0.02 g) to give coating liquid II.

In the same manner as in Example 1 except that coating liquid II was used instead of coating liquid I, gas separation membrane II (gel membrane thickness 20 µm) was obtained.

### (Example 3)

In the same manner as in Example 1 except that the amount of 1,5-hexadiene-2,5-dicarboxylic acid (manufactured by FCH) was changed to 0.005 g to give coating liquid III, gas separation membrane III (gel membrane thickness 20 µm) was obtained.

### (Example 4)

In the same manner as in Example 1 except that coating liquid IV was obtained using acrylic acid (purchased from Aldrich) (0.16 g), and vinylphosphonic acid (manufactured by Tokyo Chemical Industry Co., Ltd., hereinafter sometimes to be abbreviated as "VPA") (0.08 g), each as a noncrosslinkable compound, gas separation membrane IV (gel membrane thickness 20 µm) was obtained.

### (Example 5)

In a 150 mL high-density polyethylene (HDPE) container were charged water (29.2 g), crosslinked polyacrylic acid ("AQUPEC HV-501" manufactured by Sumitomo Seika Chemicals Co., Ltd.) (0.8 g) as the second crosslinked polymer, sodium p-styrene sulfonate (manufactured by Tokyo Chemical Industry Co., Ltd., hereinafter sometimes to be abbreviated as "SSNa") (0.48 g) as a noncrosslinkable compound, and a 50 wt% aqueous cesium hydroxide solution (manufactured by Rockwood Lithium) (9.25 g) as a basic compound, and the mixture was stirred until a uniform viscous solution was formed.

After the completion of stirring, to the obtained viscous solution were added and mixed sodium divinylbenzene sulfonate (manufactured by Tosoh Organic Chemical Co., Ltd., hereinafter sometimes to be abbreviated as "DVBSNa") (0.014 g) as a crosslinkable compound, 1-[4-(2-hydroxyethoxy)-phenyl]-2-hydroxy-2-methyl-1-propan-1-one (purchased from Aldrich) (0.20 g) as a polymerization initiator, and a surfactant ("Surflon S-242" manufactured by AGC Seimi Chemical Co., Ltd.) (0.02 g) to give coating liquid V.

In the same manner as in Example 1 except that coating liquid V was used instead of coating liquid I, gas separation membrane V (gel membrane thickness 20 µm) was obtained.

### (Example 6)

In a 150 mL high-density polyethylene (HDPE) container were charged water (22.4 g), crosslinked polyacrylic acid ("AQUPEC HV-501" manufactured by Sumitomo Seika Chemicals Co., Ltd.) (0.6 g) as the second crosslinked polymer, 2-acrylamido-2-methylpropanesulfonic acid (manufactured by Tokyo Chemical Industry Co., Ltd., hereinafter sometimes to be abbreviated as "AMPS") (0.12 g) as a noncrosslinkable compound, and a 50 wt% aqueous cesium hydroxide solution (manufactured by Rockwood Lithium) (6.68 g) as a basic compound, and the mixture was stirred until a uniform viscous solution was formed.

After the completion of stirring, to the obtained viscous solution were added and mixed 1,5-hexadiene-2,5-dicarboxylic acid (manufactured by FCH) (0.008 g) as a crosslinkable compound, 1-[4-(2-hydroxyethoxy)-phenyl]-2-hydroxy-2-methyl-1-propan-1-one (purchased from Aldrich) (0.09 g) as a polymerization initiator, and a surfactant ("Surflon S-242" manufactured by AGC Seimi Chemical Co., Ltd.) (0.02 g) to give coating liquid VI.

In the same manner as in Example 1 except that coating liquid VI was used instead of coating liquid I, gas separation membrane VI (gel membrane thickness 20 µm) was obtained.

### (Comparative Example 1)

In a 150 mL high-density polyethylene (HDPE) container were charged water (28.8 g), crosslinked polyacrylic acid ("AQUPEC HV-501" manufactured by Sumitomo Seika Chemicals Co., Ltd.) (0.96 g), and a 50 wt% aqueous cesium hydroxide solution (manufactured by Rockwood Lithium) (10.0 g), and the mixture was stirred until a uniform viscous solution was formed.

After the completion of stirring, to the obtained viscous solution was added and mixed a surfactant ("Surflon S-242" manufactured by AGC Seimi Chemical Co., Ltd.) (0.02 g) to give coating liquid VII.

The obtained coating liquid VII was applied on a surface of a hydrophobic PTFE porous membrane ("Poreflon HP-010-50" manufactured by Sumitomo Electric Fine Polymer, Inc., membrane thickness 50 µm, pore size 0.1 µm) to form a coated film, and a hydrophobic PTFE porous membrane was placed on the obtained coated film. The laminate of the hydrophobic PTFE porous membrane, coated film and hydrophobic PTFE porous membrane was dried at about 120°C for about 10 min to give gas separation membrane VII (thickness of crosslinked polyacrylic acid membrane: 25 µm) in which a membrane containing crosslinked polyacrylic acid (hereinafter sometimes to be abbreviated as "crosslinked polyacrylic acid membrane") is present in between two sheets of hydrophobic PTFE porous membrane.

### (Comparative Example 2)

In a 150 mL high-density polyethylene (HDPE) container were charged water (28.8 g), crosslinked polyacrylic acid ("AQUPEC HV-501" manufactured by Sumitomo Seika Chemicals Co., Ltd.) (0.8 g) as the second crosslinked polymer, acrylic acid (purchased from Aldrich) (0.16 g) as a noncrosslinkable compound, and a 50 wt% aqueous cesium hydroxide solution (manufactured by Rockwood Lithium) (10.0 g) as a basic compound, and the mixture was stirred until a uniform viscous solution was formed.

After the completion of stirring, to the obtained viscous solution were added and mixed pentaerythritol allyl ether (mixture of pentaerythritol monoallyl ether, pentaerythritol diallyl ether, pentaerythritol triallyl ether and pentaerythritol tetraallyl ether, purchased from Aldrich, hereinafter sometimes to be abbreviated as "PEAE") (0.018 g) as a crosslinkable compound, 1-[4-(2-hydroxyethoxy)-phenyl]-2-hydroxy-2-methyl-1-propan-1-one (IRGACURE 2959, purchased from Aldrich) (0.018 g) as a polymerization initiator, and a surfactant ("Surflon S-242" manufactured by AGC Seimi Chemical Co., Ltd.) (0.02 g) to give coating liquid VIII.

In the same manner as in Example 1 except that coating liquid VII was used instead of coating liquid I, gas separation membrane VIII (gel membrane thickness 20 µm) was obtained.

### (Comparative Example 3)

In the same manner as in Comparative Example 2 except that a random copolymer of allyl glycidyl ether, ethylene oxide and propylene oxide (Alkox CP-A2H, manufactured by Meisei Chemical Works, Ltd., hereinafter sometimes to be abbreviated as "CP-A2H") (0.018 g) was used as a crosslinkable compound instead of pentaerythritol allyl ether to give coating liquid IX, gas separation membrane IX (gel membrane thickness 20 µm) was obtained.

The kinds and amounts of the noncrosslinkable compounds and crosslinkable compounds used for producing the first crosslinked polymers (first network structures) of Examples 1 to 6 and Comparative Examples 1 to 3, the second crosslinked polymer (second network structure), the basic compound and amounts thereof are shown in Table 1.

The abbreviations used in Table 1 mean the following.
crosslinked PAA: crosslinked polyacrylic acid
AA: acrylic acid
HDDCA: 1,5-hexadiene-2,5-dicarboxylic acid
VPA: vinylphosphonic acid
SSNa: sodium p-styrene sulfonate
DVBSNa: sodium divinylbenzene sulfonate
AMPS: 2-acrylamido-2-methylpropanesulfonic acid
PEAE: pentaerythritol allyl ether
CP-A2H: random copolymer of allyl glycidyl ether, ethylene oxide and propylene oxide (Alkox CP-A2H)

The amounts (parts by weight) of the first crosslinked polymers shown in Table 1 are the amounts per 100 parts by weight of the aforementioned second crosslinked polymers.

The amounts (mol%) of the noncrosslinkable compounds and the crosslinkable compounds shown in Table 1 are each relative to the total of the crosslinkable compound and the noncrosslinkable compound.

The amounts (mol) of the basic compounds to be added and shown in Table 1 are relative to 1 mol of the total of the acidic dissociative group, the acidic dissociative group in a salt form, and the derivative group of an acidic dissociative group, each possessed by the first crosslinked polymer and the second crosslinked polymer. The 2-acrylamido-2-methylpropanesulfonic acid (AMPS) has a carbamoyl group substituted by an alkyl group having a sulfo group -CONHR" wherein R" is an alkyl group having a sulfo group. AMPS has - CONHR" and a sulfo group as an acidic dissociative group, an acidic dissociative group in a salt form or a derivative group of an acidic dissociative group. Thus, the total number of the acidic dissociative group, acidic dissociative group in a salt form and derivative group of acidic dissociative group per 1 molecule of AMPS was taken as 2, based on which the amount of the basic compound to be added was calculated.

Table 1 also shows the results of the gas separation performance of gas separation membranes I to IX as measured by the method shown in the following gas separation performance evaluation.

### (Gas separation performance evaluation)

CO₂ was separated using a gas separation apparatus provided with gas separation membrane module 51 shown in Fig. 1. To be specific, gas separation membranes I to IX prepared in Examples 1 to 6 and Comparative Examples 1 to 3 were cut in an appropriate size to have a flat membrane shape. They were each fixed between supply side 52 and permeation side 53 of stainless gas separation membrane module 51.

The source gas (CO₂: 34% by volume, N₂: 46% by volume, H₂O: 20% by volume) was supplied to supply side 52 of CO₂ gas separation membrane module 51 at a flow rate of 6.25×10⁻² mol/min through a flow controller (MFC), and sweep gas (H₂O: 100% by volume) was supplied to permeation side 53 of CO₂ gas separation membrane module 51 at a flow rate of 1.05×10⁻² mol/min. H₂O was adjusted to have the above-mentioned mixing ratio and flow rate by feeding water by quantitative feed pumps 58 and 60, and evaporating same by heating. The pressure of supply side 52 was adjusted to 900 kPa (absolute pressure) by back pressure controller 55 provided on the downstream side of cold trap 54 in the middle of an exhaust passage of the exhaust gas. Back pressure controller 59 was also provided between cold trap 56 and gas chromatograph 57 to adjust the pressure on permeation side 53 to the atmospheric pressure. The gas flow rate after removing the water vapor in the sweep gas discharged from permeation side 53 by cold trap 56 was quantified based on the analysis results of gas chromatograph 57, based on which the permeance of CO₂ and N₂ contained in the permeated gas (i.e., CO₂ permeance and N₂ permeance, unit: mol/(m²×s×kPa)) was calculated and the ratio thereof (CO₂ permeance/N₂ permeance) was calculated as CO₂/N₂ selectivity. The results are shown in Table 1.

Although not shown in the Figure, to maintain constant temperatures of gas separation membrane module 51, source gas and sweep gas, gas separation membrane module 51 and the piping for supplying the aforementioned gas into the gas separation membrane module are provided in a thermostatic tank set to a given temperature. This evaluation was performed using gas separation membrane module 51, source gas and sweep gas at 122°C.

**[Table 1]**

| | first crosslinked polymer | | | | amount of first crosslinked polymer (parts by weight) | second crosslinked polymer | basic compound | | CO₂ permeance (mol/ (m²× s×kPa)) | N₂ permeance (mol/ (m²× s×kPa)) | CO₂/N₂ selectivity |
|---|---|---|---|---|---|---|---|---|---|---|---|
| | noncrosslinkable compound | | crosslinkable compound | | | | kind | amount to be added (mol) | | | |
| | kind | amount (mol%) | kind | amount (mol%) | | | | | | | |
| Ex. 1 | AA | 95.4 | HDDCA | 4.6 | 22 | crosslinked PAA | CsOH | 2.5 | 2.25×10⁻⁵ | <1.00×10⁻⁸ | >2250 |
| Ex. 2 | AA | 95.4 | HDDCA | 4.6 | 111 | crosslinked PAA | CsOH | 2.4 | 2.00×10⁻⁵ | <1.00×10⁻⁸ | >2000 |
| Ex. 3 | AA | 98.8 | HDDCA | 1.2 | 21 | crosslinked PAA | CsOH | 2.5 | 2.53×10⁻⁵ | <1.00×10⁻⁸ | >2530 |
| Ex. 4 | AA+VPA | 96.5 | HDDCA | 3.5 | 23 | crosslinked PAA | CsOH | 2.4 | 2.38×10⁻⁵ | <1.00×10⁻⁸ | >2380 |
| Ex. 5 | SSNa | 97.5 | DVBSNa | 2.5 | 62 | crosslinked PAA | CsOH | 2.3 | 2.15×10⁻⁵ | <1.00×10⁻⁸ | >2150 |
| Ex. 6 | AMPS | 92.6 | HDDCA | 7.4 | 21 | crosslinked PAA | CsOH | 2.3 | 2.35×10⁻⁵ | <1.00×10⁻⁸ | >2350 |
| Comp. Ex. 1 | - | - | - | - | - | crosslinked PAA | CsOH | 2.5 | 3.70×10⁻⁵ | 1.27×10⁻⁵ | 3 |
| Comp. Ex. 2 | AA | 96.9 | PEAE | 3.1 | 22 | crosslinked PAA | CsOH | 2.5 | 2.64×10⁻⁵ | 4.97×10⁻⁸ | 531 |
| Comp. Ex. 3 | AA | 99.8 | CP-A2H | 0.2 | 22 | crosslinked PAA | CsOH | 2.5 | 2.67×10⁻⁵ | 5.56×10⁻⁷ | 48 |

As shown in Table 1, gas separation membranes I to VI obtained in Examples 1 to 6 and satisfying the requirements of the present invention show sufficient CO₂ permeance and drastically improved CO₂/N₂ selectivity compared to gas separation membranes VII to IX obtained in Comparative Examples 1 to 3 and failing to meet the requirements of the present invention.

### [Industrial Applicability]

The gel of the present invention is useful for acidic gas separation membrane and the like.

This application is based on a patent application No. 2017-072272 filed in Japan, the contents of which are incorporated in full herein.

### [Explanation of Symbols]

- 30, 31, 32:: flow controller (mass flow controller)
- 40:: CO₂ cylinder
- 41:: He or N₂ cylinder
- 42:: Ar cylinder
- 51:: gas separation membrane module (50: gas separation membrane,
- 52:: supply side, 53: permeation side)
- 54, 56:: cold trap
- 55, 59:: back pressure controller
- 57:: gas chromatograph
- 58, 60:: quantitative feed pump

## Claims

1. A gel having an interpenetrating network formed from a first network structure and a second network structure,
the first network structure being composed of a first crosslinked polymer formed from at least one noncrosslinkable compound selected from the group consisting of a compound represented by the following formula (I) and a compound represented by the following formula (II), and at least one crosslinkable compound selected from the group consisting of a compound represented by the following formula (III) and a compound represented by the following formula (IV), and
the second network structure being composed of a second crosslinked polymer having at least one selected from the group consisting of an acidic dissociative group, an acidic dissociative group in a salt form, and a derivative group of an acidic dissociative group: 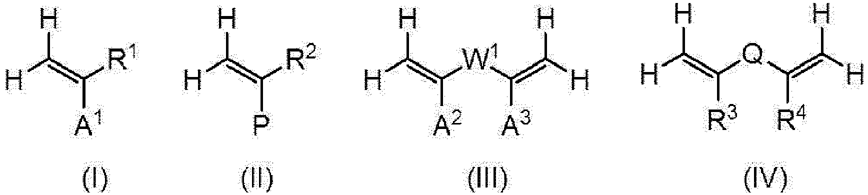 wherein
R¹ - R⁴ are each independently a hydrogen atom or a substituent,
A¹ - A³ are each independently an acidic dissociative group, an acidic dissociative group in a salt form, or a derivative group of an acidic dissociative group.
P is an aryl group having at least one selected from the group consisting of an acidic dissociative group, an acidic dissociative group in a salt form, and a derivative group of an acidic dissociative group,
W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group, and
Q is an arenediyl group having at least one selected from the group consisting of an acidic dissociative group, an acidic dissociative group in a salt form, and a derivative group of an acidic dissociative group,
a derivative group of an acidic dissociative group is a group that forms the acidic dissociative group or the acidic dissociative group in a salt form when hydrolyzed, and
the gel further comprises a basic compound, **characterised in that**
the second crosslinked polymer is an acrylic acid-based crosslinked polymer having at least one selected from the group consisting of a carboxy group, a carboxy group in a salt form, and a derivative group of a carboxy group.

2. The gel according to claim 1 wherein R¹ - R⁴ are each independently a hydrogen atom, an alkyl group optionally having substituent(s) or an aryl group optionally having substituent(s).

3. The gel according to any one of claims 1 to 2 wherein the first crosslinked polymer has at least one selected from the group consisting of a carboxy group, a sulfo group, a phosphono group, a carboxy group in a salt form, a sulfo group in a salt form, a phosphono group in a salt form, a derivative group of a carboxy group, a derivative group of a sulfo group and a derivative group of a phosphono group.

4. The gel according to any one of claims 1 to 3 wherein the compound represented by the formula (III) is a compound represented by the formula (III-1): 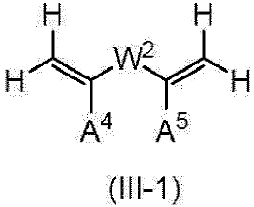 wherein
A⁴ and A⁵ are each independently a carboxy group, a carboxy group in a salt form, or a derivative group of a carboxy group and
W² is an alkylene group optionally having substituent(s) or a cycloalkanediyl group optionally having substituent(s), and
the compound represented by the formula (IV) is at least one selected from the group consisting of divinylbenzene sulfonic acid, and a salt and a derivative thereof.

5. The gel according to any one of claims 1 to 4 wherein the noncrosslinkable compound is at least one selected from the group consisting of acrylic acid, methacrylic acid, vinylsulfonic acid, vinylphosphonic acid, styrene sulfonic acid, and salts and derivatives thereof.

6. The gel according to any one of claims 1 to 3 wherein the noncrosslinkable compound is at least one selected from the group consisting of acrylic acid, and a salt and a derivative thereof, and the crosslinkable compound is a compound represented by the formula (III-1): 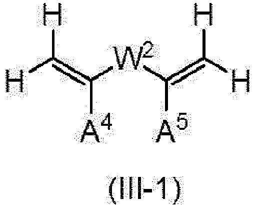 wherein
A⁴ and A⁵ are each independently a carboxy group, a carboxy group in a salt form, or a derivative group of a carboxy group and
W² is an alkylene group optionally having substituent(s) or a cycloalkanediyl group optionally having substituent(s).

7. The gel according to any one of claims 1 to 6 wherein an amount of the first crosslinked polymer is 10 to 200 parts by weight per 100 parts by weight of the second crosslinked polymer.

8. The gel according to any one of claims 1 to 7 wherein an amount of the crosslinkable compound is 0.01 to 20 mol% relative to the total of the crosslinkable compound and the noncrosslinkable compound.

9. The gel according to any one of claims 1 to 8 wherein the basic compound is at least one selected from the group consisting of carbonate, hydrogen carbonate and hydroxide of an alkali metal, and amines.

10. The gel according to any one of claims 1 to 8 wherein the basic compound is at least one selected from the group consisting of carbonate, hydrogen carbonate and hydroxide of at least one alkali metal selected from the group consisting of Li, Na, K, Rb, and Cs.

11. The gel according to any one of claims 1 to 8 wherein the basic compound is at least one selected from the group consisting of cesium carbonate and cesium hydroxide.

12. The gel according to any one of claims 1 to 11 wherein an amount of the basic compound is 0.1 to 5 mol per 1 mol of the total of the acidic dissociative group, the acidic dissociative group in a salt form, and the derivative group of an acidic dissociative group, each possessed by the first crosslinked polymer and the second crosslinked polymer.

13. The gel according to claim 1, :wherein
a derivative group of an acidic dissociative group includes -COOR^{a1}, -S(O)₂(OR^{a2}) , -P(O)(OR^{a3})(OR'^{a1}), -O-P(O)(OR^{a4})(OR'^{a2}), -CON(R'^{a3})(R'^{a4}), -S(O)₂N(R'^{a5})(R'^{a6}),-P(O){N(R'^{a7})(R'^{a8})}{N(R'^{a9})(R'^{a10})}, -O-P(O){N(R'^{a11})(R'^{a12})}{N(R'^{a13})(R'^{a14})}
R^{a1} - R^{a4} are each independently an alkyl group optionally having substituent(s), a cycloalkyl group optionally having substituent(s), an aryl group optionally having substituent(s) or an aralkyl group optionally having substituent(s), and R'^{a1} - R'^{a14} are each independently a hydrogen atom, an alkyl group optionally having substituent(s), a cycloalkyl group optionally having substituent(s), an aryl group optionally having substituent(s) or an aralkyl group optionally having substituent(s).

14. A separation membrane comprising the gel according to any one of claims 1 to 13.

15. The separation membrane according to claim 14 further comprising a porous membrane.

16. A separation apparatus comprising the separation membrane according to claim 14 or 15.

17. A method for separating at least one gas comprising contacting a mixed gas comprising at least two gasses with the separation membrane according to claim 14 or 15;
wherein
the mixed gas contains at least one acidic gas and at least one nonacidic gas, and
the acidic gas is selectively separated from the mixed gas containing the acidic gas and the nonacidic gas.

18. A method for producing a gel having an interpenetrating network formed from a first network structure composed of a first crosslinked polymer and a second network structure composed of a second crosslinked polymer having at least one selected from the group consisting of an acidic dissociative group, an acidic dissociative group in a salt form and a derivative group of an acidic dissociative group, comprising a step of forming the first crosslinked polymer by polymerizing at least one noncrosslinkable compound selected from the group consisting of a compound represented by the following formula (I) and a compound represented by the following formula (II), at least one crosslinkable compound selected from the group consisting of a compound represented by the following formula (III) and a compound represented by the following formula (IV) in a mixture comprising water and the second crosslinked polymer, and a basic compound: 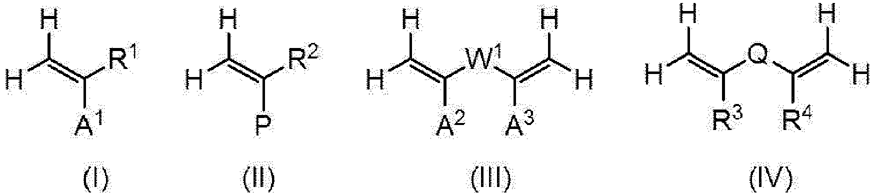 wherein
R¹ - R⁴ are each independently a hydrogen atom or a substituent,
A¹ - A³ are each independently an acidic dissociative group, an acidic dissociative group in a salt form, or a derivative group of an acidic dissociative group.
P is an aryl group having at least one selected from the group consisting of an acidic dissociative group, an acidic dissociative group in a salt form, and a derivative group of an acidic dissociative group,
W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group, and
Q is an arenediyl group having at least one selected from the group consisting of an acidic dissociative group, an acidic dissociative group in a salt form, and a derivative group of an acidic dissociative group,
a derivative group of an acidic dissociative group is a group that forms the acidic dissociative group or the acidic dissociative group in a salt form when hydrolyzed, **characterised in that**
the second crosslinked polymer is an acrylic acid-based crosslinked polymer having at least one selected from the group consisting of a carboxy group, a carboxy group in a salt form, and a derivative group of a carboxy group.

19. A method for producing a separation membrane comprising a gel having an interpenetrating network formed from a first network structure composed of a first crosslinked polymer and a second network structure composed of a second crosslinked polymer having at least one selected from the group consisting of an acidic dissociative group, an acidic dissociative group in a salt form and a derivative group of an acidic dissociative group, comprising
a step of forming a coated film by applying a mixture comprising water, a basic compound, at least one noncrosslinkable compound selected from the group consisting of a compound represented by the following formula (I) and a compound represented by the following formula (II), and at least one crosslinkable compound selected from the group consisting of a compound represented by the following formula (III) and a compound represented by the following formula (IV), and the second crosslinked polymer to a substrate, and
a step of forming the first crosslinked polymer by polymerizing the noncrosslinkable compound and the crosslinkable compound: 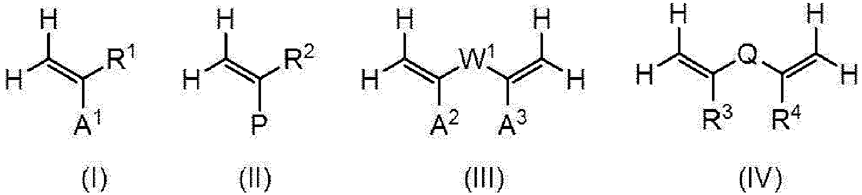 wherein
R¹ - R⁴ are each independently a hydrogen atom or a substituent,
A¹ - A³ are each independently an acidic dissociative group, an acidic dissociative group in a salt form, or a derivative group of an acidic dissociative group.
P is an aryl group having at least one selected from the group consisting of an acidic dissociative group, an acidic dissociative group in a salt form, and a derivative group of an acidic dissociative group,
W¹ is an alkylene group optionally having substituent(s), a cycloalkanediyl group optionally having substituent(s), an arenediyl group optionally having substituent(s), or a divalent group optionally having substituent(s) which is a combination of at least two selected from the group consisting of an alkylene group, a cycloalkanediyl group and an arenediyl group,
Q is an arenediyl group having at least one selected from the group consisting of an acidic dissociative group, an acidic dissociative group in a salt form, and a derivative group of an acidic dissociative group,
a derivative group of an acidic dissociative group is a group that forms the acidic dissociative group or the acidic dissociative group in a salt form when hydrolyzed, **characterised in that**
the second crosslinked polymer is an acrylic acid-based crosslinked polymer having at least one selected from the group consisting of a carboxy group, a carboxy group in a salt form, and a derivative group of a carboxy group.

20. The method according to claim 19 wherein the substrate is a porous membrane.

21. The method according to any one of claims 18 to 20 wherein the crosslinkable compound and the noncrosslinkable compound are polymerized by photo-radical polymerization.

## Patentansprüche

1. Gel mit einem interpenetrierenden Netzwerk, das aus einer ersten Netzwerkstruktur und einer zweiten Netzwerkstruktur gebildet ist, wobei
die erste Netzwerkstruktur aus einem ersten vernetzten Polymer aus mindestens einer nichtvernetzbaren Verbindung ausgewählt aus der Gruppe bestehend aus einer durch nachfolgende Formel (I) repräsentierten Verbindung und einer durch nachfolgende Formel (II) repräsentierten Verbindung, und mindestens einer vernetzbaren Verbindung ausgewählt aus der Gruppe bestehend aus einer durch nachfolgende Formel (III) repräsentierten Verbindung und einer durch nachfolgende Formel (IV) repräsentierten Verbindung zusammengesetzt ist, und
die zweite Netzwerkstruktur aus einem zweiten vernetzten Polymer mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe zusammengesetzt ist: 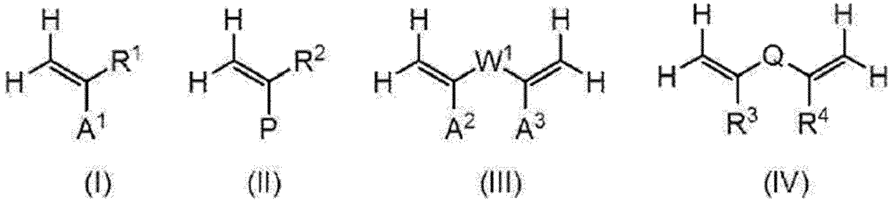 wobei
R¹ - R⁴ jeweils unabhängig ein Wasserstoffatom oder ein Substituent sind,
A¹ - A³ jeweils unabhängig eine sauer dissoziierende Gruppe, eine sauer dissoziierende Gruppe in Form eines Salzes oder eine Derivatgruppe einer sauer dissoziierenden Gruppe sind,
P eine Arylgruppe mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe ist,
W¹ eine Alkylengruppe gegebenenfalls mit Substituent(en), eine Cycloalkandiylgruppe gegebenenfalls mit Substituent(en), eine Arendiylgruppe gegebenenfalls mit Substituent(en) oder eine divalente Gruppe gegebenenfalls mit Substituent(en), welche eine Kombination aus mindestens zwei Gruppen ausgewählt aus der Gruppe bestehend aus einer Alkylengruppe, einer Cycloalkandiylgruppe und einer Arendiylgruppe ist, ist, und
Q eine Arendiylgruppe mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe ist,
eine Derivatgruppe einer sauer dissoziierenden Gruppe eine Gruppe ist, die die sauer dissoziierende Gruppe oder die sauer dissoziierende Gruppe in Form eines Salzes bildet, wenn sie hydrolysiert wird, und
das Gel des Weiteren eine basische Verbindung umfasst, **dadurch gekennzeichnet, dass**
das zweite vernetzte Polymer ein vernetztes Polymer auf Acrylsäurebasis ist mit mindestens einer Gruppe ausgewählt aus der Gruppe bestehend aus einer Carboxygruppe, einer Carboxygruppe in Form eines Salzes und einer Derivatgruppe einer Carboxygruppe.

2. Gel gemäß Anspruch 1, wobei R¹ - R⁴ jeweils unabhängig ein Wasserstoffatom, eine Alkylgruppe gegebenenfalls mit Substituent(en) oder eine Arylgruppe gegebenenfalls mit Substituent(en) sind.

3. Gel gemäß einem der Ansprüche 1 bis 2, wobei das erste vernetzte Polymer mindestens eine Gruppe ausgewählt aus der Gruppe bestehend aus einer Carboxygruppe, einer Sulfogruppe, eine Phosphonogruppe, eine Carboxygruppe in Form eines Salzes, einer Sulfogruppe in Form eines Salzes, einer Phosphonogruppe in Form eines Salzes, eine Derivatgruppe einer Carboxygruppe, eine Derivatgruppe einer Sulfogruppe und eine Derivatgruppe einer Phosphonogruppe enthält.

4. Gel gemäß einem der Ansprüche 1 bis 3, wobei die durch Formel (III) repräsentierte Verbindung eine durch Formel (III-1) repräsentierte Verbindung ist: 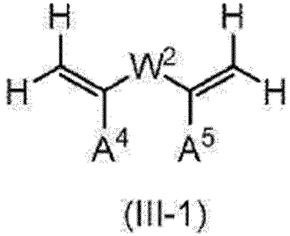 wobei
A⁴ und A⁵ jeweils unabhängig eine Carboxygruppe, eine Carboxygruppe in Form eines Salzes oder eine Derivatgruppe einer Carboxygruppe sind, und
W² eine Alkylengruppe gegebenenfalls mit Substituent(en) oder eine Cycloalkandiylgruppe gegebenenfalls mit Substituent(en) ist, und
die durch Formel (IV) repräsentierte Verbindung mindestens Eines ausgewählt aus der Gruppe bestehend aus Divinylbenzol Sulfonsäure, und einem Salz und einem Derivat davon ist.

5. Gel gemäß einem der Ansprüche 1 bis 4, wobei die nichtvernetzbare Verbindung mindestens Eines ausgewählt aus der Gruppe bestehend aus Acrylsäure, Methacrylsäure, Vinylsulfonsäure, Vinylphosphonsäure, Styrolsulfonsäure, und Salze und Derivate davon ist.

6. Gel gemäß einem der Ansprüche 1 bis 3, wobei die nichtvernetzbare Verbindung mindestens Eines ausgewählt aus der Gruppe bestehend aus Acrylsäure, und einem Salz und einem Derivat davon ist, und es sich bei der vernetzbaren Verbindung um eine durch Formel (III-1) repräsentierte Verbindung handelt: 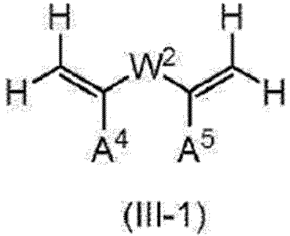 wobei
A⁴ und A⁵ jeweils unabhängig eine Carboxygruppe, eine Carboxygruppe in Form eines Salzes oder eine Derivatgruppe einer Carboxygruppe sind, und
W² eine Alkylengruppe, gegebenenfalls mit Substituent(en), oder eine Cycloalkandiylgruppe, gegebenenfalls mit Substituent(en), ist.

7. Gel gemäß einem der Ansprüche 1 bis 6, wobei eine Menge des ersten vernetzten Polymers 10 bis 200 Gewichtsteile pro 100 Gewichtsteile des zweiten vernetzten Polymers beträgt.

8. Gel gemäß einem der Ansprüche 1 bis 7, wobei eine Menge der vernetzbaren Verbindung 0,01 bis 20 mol% relativ zur Gesamtmenge von vernetzbarer Verbindung und nichtvernetzbarer Verbindung beträgt.

9. Gel gemäß einem der Ansprüche 1 bis 8, wobei die basische Verbindung mindestens Eines ausgewählt aus der Gruppe bestehend aus Carbonat, Hydrogencarbonat und Hydroxid von einem Alkalimetall, und Aminen ist.

10. Gel gemäß einem der Ansprüche 1 bis 8, wobei die basische Verbindung mindestens Eines ausgewählt aus der Gruppe bestehend aus Carbonat, Hydrogencarbonat und Hydroxid von mindestens einem Alkalimetall ausgewählt aus der Gruppe bestehend aus Li, Na, K, Rb und Cs ist.

11. Gel gemäß einem der Ansprüche 1 bis 8, wobei die basische Verbindung mindestens Eines ausgewählt aus der Gruppe bestehend aus Cäsiumcarbonat und Cäsiumhydroxid ist

12. Gel gemäß einem der Ansprüche 1 bis 11, wobei eine Menge der basischen Verbindung 0,1 bis 5 mol pro 1 mol der Gesamtmenge der sauer dissoziierenden Gruppe, der sauer dissoziierenden Gruppe in Form eines Salzes und der Derivatgruppe einer sauer dissoziierenden Gruppe beträgt, die jeweils in dem ersten vernetzten Polymer und dem zweiten vernetzten Polymer vorhanden sind.

13. Gel gemäß Anspruch 1, wobei
eine Derivatgruppe einer sauer dissoziierenden Gruppe -COOR^{a1},-S(O)₂(OR^{a2}), -P(O)(OR^{a3})(OR'^{a1}), -O-P(O)(OR^{a4})(OR'^{a2}), -CON(R'^{a3})(R'^{a4}),-S(O)₂N(R'^{a5})(R'^{a6}), -P(O){N(R'^{a7})(R'^{a8})}{N(R'^{a9})(R'^{a10*}}, -O-P(O){N(R_{'}^{a11})(R'^{a12})}{N(R'^{a13})(R'^{a14})} enthält,
R^{a1} - R^{a4} jeweils unabhängig eine Aklylgruppe, gegebenenfalls mit Substituent(en), eine Cycloalkylgruppe, gegebenenfalls mit Substituent(en), eine Arylgruppe gegebenenfalls mit Substituent(en) oder eine Aralkylgruppe, gegebenenfalls mit Substituent(en) sind, und
R'^{a1} - R'^{a14} jeweils unabhängig ein Wasserstoffatom, eine Alkylgruppe, gegebenenfalls mit Substituent(en), eine Cycloalkylgruppe, gegebenenfalls mit Substituent(en), eine Arylgruppe, gegebenenfalls mit Subsituent(en), oder eine Aralkylgruppe, gegebenenfalls mit Substituent(en) sind.

14. Trennmembran enthaltend das Gel gemäß einem der Ansprüche 1 bis 13.

15. Trennmembran gemäß Anspruch 14, ferner umfassend eine poröse Membran.

16. Trennvorrichtung, welche die Trennmembran gemäß Anspruch 14 oder 15 umfasst.

17. Verfahren zur Trennung mindestens eines Gases, welches Kontaktieren eines mindestens zwei Gase enthaltenden Mischgases mit der Trennmembran gemäß Anspruch 14 oder 15 umfasst, wobei
das Mischgas mindestens ein saures Gas und mindestens ein nichtsaures Gas enthält, und
das saure Gas selektiv vom das saure und das nichtsaure Gas enthaltende Mischgas getrennt wird.

18. Verfahren zur Herstellung eines Gels mit einem interpenetrierendem Netzwerk, das aus einer ersten Netzwerkstruktur, die aus einem ersten vernetzten Polymer zusammengesetzt ist, und einer zweiten Netzwerkstruktur, die aus einem zweiten vernetzten Polymer mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe in Form eines Salzes zusammengesetzt ist, gebildet ist, welches einen Schritt zum Bilden des ersten vernetzten Polymers durch Polymerisieren von mindestens einer nichtvernetzbaren Verbindung ausgewählt aus der Gruppe bestehend aus einer durch nachfolgende Formel (I) repräsentierten Verbindung und einer durch nachfolgende Formel (II) repräsentierten Verbindung, mindestens einer vernetzbaren Verbindung ausgewählt aus der Gruppe bestehend aus einer durch nachfolgende Formel (III) repräsentierten Verbindung und einer durch nachfolgende Formel (IV) repräsentierten Verbindung in einer Mischung, die Wasser, das zweite vernetzte Polymer und eine basischen Verbindung umfasst: 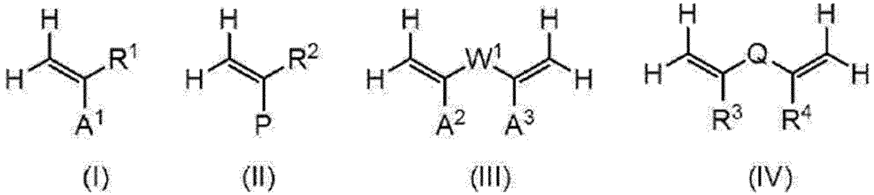 wobei
R¹ - R⁴ jeweils unabhängig ein Wasserstoffatom oder ein Substituent sind,
A¹ - A³ jeweils unabhängig eine sauer dissoziierende Gruppe, eine sauer dissoziierende Gruppe in Form eines Salzes oder eine Derivatgruppe einer sauer dissoziierenden Gruppe in Form eines Salzes sind,
P eine Arylgruppe mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe ist,
W¹ eine Alkylengruppe, gegebenenfalls mit Substituent(en), eine Cycloalkandiylgruppe, gegebenenfalls mit Substituent(en), einer Arendiylgruppe, gegebenenfalls mit Substituent(en) oder eine divalente Gruppe, gegebenenfalls mit Substituent(en), welche eine Kombination aus mindestens zwei Gruppen ausgewählt aus der Gruppe bestehend aus einer Alkylengruppe, einer Cycloalkandiylgruppe und einer Arendiylgruppe ist, ist, und
Q eine Arendiylgruppe mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe ist,
eine Derivatgruppe einer sauer dissoziierenden Gruppe eine Gruppe ist, die die sauer dissoziierende Gruppe oder eine sauer dissoziierende Gruppe in Form eines Salzes bildet, wenn sie hydrolysiert wird, **dadurch gekennzeichnet, dass**
das zweite vernetzte Polymer ein vernetztes Polymer auf Acrylsäurebasis mit mindestens einer Gruppe ausgewählt aus der Gruppe bestehend aus einer Carboxygruppe, einer Carboxygruppe in Form eines Salzes und einer Derivatgruppe einer Carboxygruppe ist.

19. Verfahren zur Herstellung einer Trennmembran, die ein Gel mit einem interpenetrierenden Netzwerk umfasst, das aus einer ersten Netzwerkstruktur, die aus einem ersten vernetzten Polymer zusammengesetzt ist, und einer zweiten Netzwerkstruktur, die aus einem zweiten vernetzten Polymer mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe zusammengesetzt ist, gebildet ist, , welches umfasst:
einen Schritt des Bildens eines beschichteten Films durch Auftragen einer Mischung, die Wasser, eine basische Verbindung, mindestens eine nichtvernetzbare Verbindung ausgewählt aus der Gruppe bestehend aus einer durch nachfolgende Formel (I) repräsentierten Verbindung und einer durch nachfolgende Formel (II) repräsentierten Verbindung, und mindestens eine vernetzbare Verbindung ausgewählt aus der Gruppe bestehend aus einer durch nachfolgende Formel (III) repräsentierten Verbindung und einer durch nachfolgende Formel (IV) repräsentierten Verbindung umfasst, und des zweiten vernetzten Polymers auf ein Substrat, und
einen Schritt des Bildens des ersten vernetzten Polymers durch Polymerisieren der nichtvernetzbaren Verbindung und der vernetzbaren Verbindung: 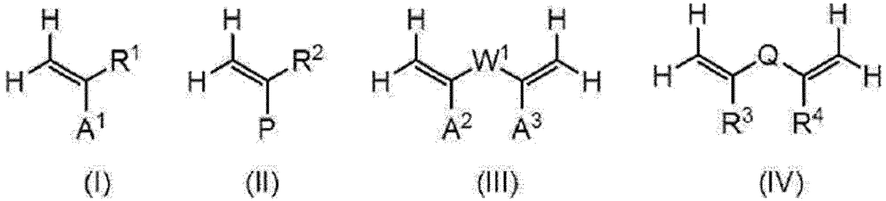 wobei
R¹ - R⁴ jeweils unabhängig ein Wasserstoffatom oder ein Substituent sind,
A¹ - A³ jeweils unabhängig eine sauer dissoziierende Gruppe, eine sauer dissoziierende Gruppe in Form eines Salzes oder eine Derivatgruppe einer sauer dissoziierenden Gruppe sind.
P eine Arylgruppe mit mindestens einer Gruppe ausgewählt aus der Gruppe bestehend aus einer sauer dissoziierenden Gruppe, einer sauer dissoziierenden Gruppe in Form eines Salzes und einer Derivatgruppe einer sauer dissoziierenden Gruppe ist,
W¹ eine Alkylengruppe, gegebenenfalls mit Substituent(en), eine Cycloalkandiylgruppe, gegebenenfalls mit Substituent(en), eine Arendiylgruppe, gegebenenfalls mit Substituent(en) oder eine divalente Gruppe, gegebenenfalls mit Substituent(en), welche eine Kombination aus mindestens zwei Gruppen ausgewählt aus der Gruppe bestehend aus einer Alkylengruppe, einer Cycloalkandiylgruppe und einer Arendiylgruppe ist, ist,
Q eine Arendiylgruppe mit mindestens einer Gruppe ausgewählt aus der Gruppe bestehend aus einer sauer dissoziierenden Gruppe, eine sauer dissoziierende Gruppe in Form eines Salzes und eine Derivatgruppe einer sauer dissoziierenden Gruppe ist,
eine Derivatgruppe einer sauer dissoziierenden Gruppe eine Gruppe ist, die eine sauer dissoziierende Gruppe oder eine sauer dissoziierende Gruppe in Form eines Salzes bildet, wenn sie hydrolysiert wird, **dadurch gekennzeichnet, dass**
das zweite vernetzte Polymer ein vernetztes Polymer auf Acrylsäurebasis mit mindestens einer Gruppe ausgewählt aus der Gruppe bestehend aus einer Carboxygruppe, einer Carboxygruppe in Form eines Salzes und einer Derivatgruppe einer Carboxygruppe ist.

20. Verfahren nach Anspruch 19, wobei das Substrat eine poröse Membran ist.

21. Verfahren nach einem der Ansprüche 18 bis 20, wobei die vernetzbare Verbindung und die nichtvernetzbare Verbindung durch photoradikalische Polymerisation polymerisiert werden.

## Revendications

1. Gel présentant un réseau interpénétrant formé à partir d'une première structure de réseau et d'une seconde structure de réseau,
la première structure de réseau étant composée d'un premier polymère réticulé formé à partir d'au moins un composé non réticulable sélectionné dans le groupe consistant en un composé représenté par la formule (I) suivante et un composé représenté par la formule (II) suivante, et au moins un composé réticulable sélectionné dans le groupe consistant en un composé représenté par la formule (III) suivante et un composé représenté par la formule (IV) suivante, et
la seconde structure de réseau étant composée d'un second polymère réticulé présentant au moins l'un sélectionné dans le groupe consistant en un groupe dissociatif acide, un groupe dissociatif acide sous forme de sel, et un groupe dérivé d'un groupe dissociatif acide : 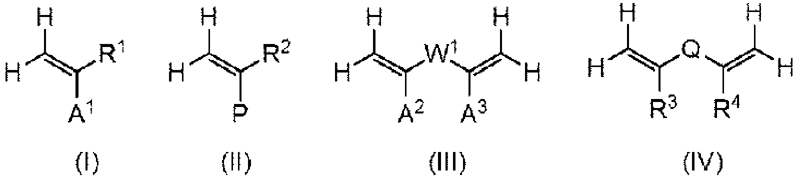 dans lequel
R¹ - R⁴ sont chacun indépendamment un atome d'hydrogène ou un substituant,
A¹ - A³ sont chacun indépendamment un groupe dissociatif acide, un groupe dissociatif acide sous forme de sel, ou un groupe dérivé d'un groupe dissociatif acide.
P est un groupe aryle présentant au moins l'un sélectionné dans le groupe consistant en un groupe dissociatif acide, un groupe dissociatif acide sous forme de sel, et un groupe dérivé d'un groupe dissociatif acide,
W¹ est un groupe alkylène présentant facultativement un ou plusieurs substituants, un groupe cycloalcanediyle présentant facultativement un ou plusieurs substituants, un groupe arènediyle présentant facultativement un ou plusieurs substituants, ou un groupe divalent présentant facultativement un ou plusieurs substituants qui est une combinaison d'au moins deux sélectionnés dans le groupe consistant en un groupe alkylène, un groupe cycloalcanediyle et un groupe arènediyle, et
Q est un groupe arènediyle présentant au moins l'un sélectionné dans le groupe consistant en un groupe dissociatif acide, un groupe dissociatif acide sous forme de sel, et un groupe dérivé d'un groupe dissociatif acide,
un groupe dérivé d'un groupe dissociatif acide est un groupe qui forme le groupe dissociatif acide ou le groupe dissociatif acide sous forme de sel quand il est hydrolysé, et
le gel comprend en outre un composé basique, **caractérisé en ce que**
le second polymère réticulé est un polymère réticulé à base d'acide acrylique présentant au moins l'un sélectionné dans le groupe consistant en un groupe carboxy, un groupe carboxy sous forme de sel, et un groupe dérivé d'un groupe carboxy.

2. Gel selon la revendication 1 dans lequel R¹ - R⁴ sont chacun indépendamment un atome d'hydrogène, un groupe alkyle présentant facultativement un ou plusieurs substituants ou un groupe aryle présentant facultativement un ou plusieurs substituants.

3. Gel selon l'une quelconque des revendications 1 à 2, dans lequel le premier polymère réticulé présente au moins l'un sélectionné dans le groupe consistant en un groupe carboxy, un groupe sulfo, un groupe phosphono, un groupe carboxy sous forme de sel, un groupe sulfo sous forme de sel, un groupe phosphono sous forme de sel, un groupe dérivé d'un groupe carboxy, un groupe dérivé d'un groupe sulfo et un groupe dérivé d'un groupe phosphono.

4. Gel selon l'une quelconque des revendications 1 à 3, dans lequel le composé représenté par la formule (III) est un composé représenté par la formule (III-1) : 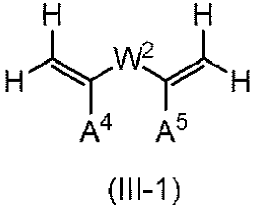 dans lequel
A⁴ et A⁵ sont chacun indépendamment un groupe carboxy, un groupe carboxy sous forme de sel, ou un groupe dérivé d'un groupe carboxy et
W² est un groupe alkylène présentant facultativement un ou plusieurs substituants ou un groupe cycloalcanediyle présentant facultativement un ou plusieurs substituants, et
le composé représenté par la formule (IV) est au moins l'un sélectionné dans le groupe consistant en l'acide divinylbenzènesulfonique, et un sel et un dérivé de celui-ci.

5. Gel selon l'une quelconque des revendications 1 à 4, dans lequel le composé non réticulable est au moins l'un sélectionné dans le groupe consistant en l'acide acrylique, l'acide méthacrylique, l'acide vinylsulfonique, l'acide vinylphosphonique, l'acide styrènesulfonique, et les sels et dérivés de ceux-ci.

6. Gel selon l'une quelconque des revendications 1 à 3, dans lequel le composé non réticulable est au moins l'un sélectionné dans le groupe consistant en l'acide acrylique, et un sel et un dérivé de celui-ci, et le composé réticulable est un composé représenté par la formule (III-1) : 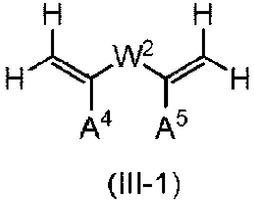 dans lequel
A⁴ et A⁵ sont chacun indépendamment un groupe carboxy, un groupe carboxy sous forme de sel, ou un groupe dérivé d'un groupe carboxy et
W² est un groupe alkylène présentant facultativement un ou plusieurs substituants ou un groupe cycloalcanediyle présentant facultativement un ou plusieurs substituants.

7. Gel selon l'une quelconque des revendications 1 à 6, dans lequel une quantité du premier polymère réticulé est de 10 à 200 parties en poids pour 100 parties en poids du second polymère réticulé.

8. Gel selon l'une quelconque des revendications 1 à 7, dans lequel une quantité du composé réticulable est de 0,01 à 20 % en mole par rapport au total du composé réticulable et du composé non réticulable.

9. Gel selon l'une quelconque des revendications 1 à 8, dans lequel le composé basique est au moins l'un sélectionné dans le groupe consistant en un carbonate, un hydrogénocarbonate et un hydroxyde d'un métal alcalin, et les amines.

10. Gel selon l'une quelconque des revendications 1 à 8, dans lequel le composé basique est au moins l'un sélectionné dans le groupe consistant en un carbonate, un hydrogénocarbonate et un hydroxyde d'au moins un métal alcalin sélectionné dans le groupe consistant en Li, Na, K, Rb et Cs.

11. Gel selon l'une quelconque des revendications 1 à 8, dans lequel le composé basique est au moins l'un sélectionné dans le groupe consistant en le carbonate de césium et l'hydroxyde de césium.

12. Gel selon l'une quelconque des revendications 1 à 11, dans lequel une quantité du composé basique est de 0,1 à 5 moles pour 1 mole du total du groupe dissociatif acide, du groupe dissociatif acide sous forme de sel, et du groupe dérivé d'un groupe dissociatif acide, chacun possédé par le premier polymère réticulé et le second polymère réticulé.

13. Gel selon la revendication 1, dans lequel
un groupe dérivé d'un groupe dissociatif acide inclut -COOR^{a1}, -S(O)₂(OR^{a2}),-P(O)(OR^{a3})(OR'^{a1}), -O-P(O)(OR^{a4})(OR'^{a2}), -CON(R^{a3})(R^{a4}), -S(O)₂N(R^{a5})(R^{a6}),-P(O){N(R'^{a7})(R'^{a8})}{N(R^{'a9})(R'^{a10})}, -O-P(O){N(R'^{a11})(R'^{a12})}{N(R'^{a13})(R'^{a14})}
R^{a1} - R^{a4} sont chacun indépendamment un groupe alkyle présentant facultativement un ou plusieurs substituants, un groupe cycloalkyle présentant facultativement un ou plusieurs substituants, un groupe aryle présentant facultativement un ou plusieurs substituants ou un groupe aralkyle présentant facultativement un ou plusieurs substituants, et R'^{a1} - R'^{a14} sont chacun indépendamment un atome d'hydrogène, un groupe alkyle présentant facultativement un ou plusieurs substituants, un groupe cycloalkyle présentant facultativement un ou plusieurs substituants, un groupe aryle présentant facultativement un ou plusieurs substituants ou un groupe aralkyle présentant facultativement un ou plusieurs substituants.

14. Membrane de séparation comprenant le gel selon l'une quelconque des revendications 1 à 13.

15. Membrane de séparation selon la revendication 14 comprenant en outre une membrane poreuse.

16. Appareil de séparation comprenant la membrane de séparation selon la revendication 14 ou 15.

17. Procédé de séparation d'au moins un gaz comprenant la mise en contact d'un gaz mélangé comprenant au moins deux gaz avec la membrane de séparation selon la revendication 14 ou 15 ;
dans lequel
le gaz mélangé contient au moins un gaz acide et au moins un gaz non acide, et
le gaz acide est séparé sélectivement du gaz mélangé contenant le gaz acide et le gaz non acide.

18. Procédé de production d'un gel présentant un réseau interpénétrant formé à partir d'une première structure de réseau composée d'un premier polymère réticulé et d'une seconde structure de réseau composée d'un second polymère réticulé présentant au moins l'un sélectionné dans le groupe consistant en un groupe dissociatif acide, un groupe dissociatif sous forme de sel et un groupe dérivé d'un groupe dissociatif acide, comprenant une étape de formation du premier polymère réticulé en polymérisant au moins un composé non réticulable sélectionné dans le groupe consistant en un composé représenté par la formule (I) suivante et un composé représenté par la formule (II) suivante, au moins un composé réticulable sélectionné dans le groupe consistant en un composé représenté par la formule (III) suivante et un composé représenté par la formule (IV) suivante dans un mélange comprenant de l'eau et le second polymère réticulé, et un composé basique : 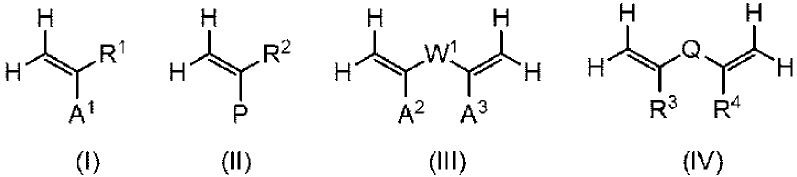 dans lequel
R¹ - R⁴ sont chacun indépendamment un atome d'hydrogène ou un substituant,
A¹ - A³ sont chacun indépendamment un groupe dissociatif acide, un groupe dissociatif acide sous forme de sel, ou un groupe dérivé d'un groupe dissociatif acide. P est un groupe aryle présentant au moins l'un sélectionné dans le groupe consistant en un groupe dissociatif acide, un groupe dissociatif acide sous forme de sel, et un groupe dérivé d'un groupe dissociatif acide,
W¹ est un groupe alkylène présentant facultativement un ou plusieurs substituants, un groupe cycloalcanediyle présentant facultativement un ou plusieurs substituants, un groupe arènediyle présentant facultativement un ou plusieurs substituants, ou un groupe divalent présentant facultativement un ou plusieurs substituants qui est une combinaison d'au moins deux sélectionnés dans le groupe consistant en un groupe alkylène, un groupe cycloalcanediyle et un groupe arènediyle, et
Q est un groupe arènediyle présentant au moins l'un sélectionné dans le groupe consistant en un groupe dissociatif acide, un groupe dissociatif acide sous forme de sel, et un groupe dérivé d'un groupe dissociatif acide,
un groupe dérivé d'un groupe dissociatif acide est un groupe qui forme le groupe dissociatif acide ou le groupe dissociatif acide sous forme de sel quand il est hydrolysé,
**caractérisé en ce que**
le second polymère réticulé est un polymère réticulé à base d'acide acrylique présentant au moins l'un sélectionné dans le groupe consistant en un groupe carboxy, un groupe carboxy sous forme de sel, et un groupe dérivé d'un groupe carboxy.

19. Procédé de production d'une membrane de séparation comprenant un gel présentant un réseau interpénétrant formé à partir d'une première structure de réseau composée d'un premier polymère réticulé et d'une seconde structure de réseau composée d'un second polymère réticulé présentant au moins l'un sélectionné dans le groupe consistant en un groupe dissociatif acide, un groupe dissociatif sous forme de sel et un groupe dérivé d'un groupe dissociatif acide, comprenant
une étape de formation d'un film revêtu en appliquant un mélange comprenant de l'eau, un composé basique, au moins un composé non réticulable sélectionné dans le groupe consistant en un composé représenté par la formule (I) suivante et un composé représenté par la formule (II) suivante, et au moins un composé réticulable sélectionné dans le groupe consistant en un composé représenté par la formule (III) suivante et un composé représenté par la formule (IV) suivante, et le second polymère réticulé sur un substrat, et
une étape de formation du premier polymère réticulé en polymérisant le composé non réticulable et le composé réticulable : 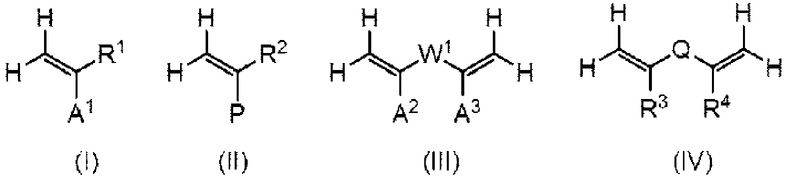
dans lequel
R¹ - R⁴ sont chacun indépendamment un atome d'hydrogène ou un substituant,
A¹ - A³ sont chacun indépendamment un groupe dissociatif acide, un groupe dissociatif acide sous forme de sel, ou un groupe dérivé d'un groupe dissociatif acide.
P est un groupe aryle présentant au moins l'un sélectionné dans le groupe consistant en un groupe dissociatif acide, un groupe dissociatif acide sous forme de sel, et un groupe dérivé d'un groupe dissociatif acide,
W¹ est un groupe alkylène présentant facultativement un ou plusieurs substituants, un groupe cycloalcanediyle présentant facultativement un ou plusieurs substituants, un groupe arènediyle présentant facultativement un ou plusieurs substituants, ou un groupe divalent présentant facultativement un ou plusieurs substituants qui est une combinaison d'au moins deux sélectionnés dans le groupe consistant en un groupe alkylène, un groupe cycloalcanediyle et un groupe arènediyle,
Q est un groupe arènediyle présentant au moins l'un sélectionné dans le groupe consistant en un groupe dissociatif acide, un groupe dissociatif acide sous forme de sel, et un groupe dérivé d'un groupe dissociatif acide,
un groupe dérivé d'un groupe dissociatif acide est un groupe qui forme le groupe dissociatif acide ou le groupe dissociatif acide sous forme de sel quand il est hydrolysé, **caractérisé en ce que**
le second polymère réticulé est un polymère réticulé à base d'acide acrylique présentant au moins l'un sélectionné dans le groupe consistant en un groupe carboxy, un groupe carboxy sous forme de sel, et un groupe dérivé d'un groupe carboxy.

20. Procédé selon la revendication 19, dans lequel le substrat est une membrane poreuse.

21. Procédé selon l'une quelconque des revendications 18 à 20, dans lequel le composé réticulable et le composé non réticulable sont polymérisés par polymérisation photoradicalaire.
